# EUROPEAN PATENT SPECIFICATION

(11) **EP 3 666 087 B1**
(45) Date of publication and mention of the grant of the patent: **08.01.2025**
(21) Application number: 18845095.1
(22) Date of filing: 01.08.2018
(51) Int. Cl.: A23L 5/20, A21D 2/08, A23C 13/00, A23L 11/65, A23D 7/00, A23D 9/00, A23F 3/14, A23F 5/14, A23G 1/00, A23L 2/00, A23L 11/00, A23L 27/60, A23L 2/56, A23L 27/00

(54) **FOOD COMPRISING OFF-FLAVOR REDUCING AGENT**
LEBENSMITTEL ENTHALTEND MITTEL ZUR VERMINDERUNG DES BEIGESCHMACKS
ALIMENT COMPRENANT UN AGENT DE RÉDUCTION DE GOÛT DÉSAGRÉABLE

(30) Priority: 08.08.2017 JP 2017152832; 16.11.2017 JP 2017220554; 11.07.2018 JP 2018131176; 11.07.2018 JP 2018131173; 11.07.2018 JP 2018131174; 11.07.2018 JP 2018131175; 30.07.2018 JP 2018142014; 30.07.2018 JP 2018142015; 30.07.2018 JP 2018142016
(43) Date of publication of application: 17.06.2020
(73) Proprietor: Fuji Oil Holdings Inc., Izumisano-shi, Osaka 598-8540 (JP)
(72) Inventor: HE, MOGENG, Tsukubamirai-shi Ibaraki 300-2436 (JP); SAKATA, Junichi, Tsukubamirai-shi Ibaraki 300-2436 (JP)
(74) Representative: Becker, Eberhard
(86) International application number: PCT/JP2018/028785
(87) International publication number: WO 2019/031326

(56) References cited:
- WO-A1-2015/199069
- WO-A1-2015/199069
- WO-A1-2016/194558
- WO-A1-2016/194558
- JP-A- 2015 033 335
- JP-A- 2015 033 335
- JP-A- 2015 116 189
- JP-A- 2015 116 189
- US-A1- 2012 189 750

## Description

### [Technical Field]

The present invention relates to food in which an off-flavor reducing agent is used.

### [Background Art]

An off-flavor in a food is recognized as an unfavorable flavor when the food is eaten. Typically, there is excessive bitterness, an astringent taste, an unpleasant taste, and the like.

An astringent taste is a stimulus which is also expressed as astringency and is felt in the mouth. In brief, an astringent taste is a stimulus accompanied by a feeling, as if the mucous membrane in the oral cavity has "shrunk", which is felt when an astringent persimmon is taken into the mouth. There are many opinions that an astringent taste is not included in the strict sense of a "taste".

Patent Literature 1 discloses that it is possible to prevent an astringent taste derived from grape seed extract by incorporating specific proportions of glucose and maltose in beverages containing grape seed extract.

Patent Literature 2 discloses that hardly any astringent taste is exhibited using sucralose in combination with a polyphenol exhibiting an astringent taste.

Patent Literature 3 discloses polyunsaturated fatty acid-containing edible vegetable oils and fats which contain a predetermined amount of water-soluble tea polyphenols.

Since cereal-derived materials sometimes exhibit a unique off-flavor, this sometimes causes a problem in foods in which cereal-derived materials are used.

Patent Literature 4 discloses that sucralose has an effect of masking a protein material odor derived from soybean proteins, wheat proteins, and the like.

Patent Literature 5 discloses that germinated whole fat soybean flour or the like improves the flavor in soybean proteins or the like.

Since vegetables or vegetable-derived materials sometimes exhibit a unique off-flavor, this sometimes causes a problem in foods in which vegetables or vegetable-derived materials are used.

Patent Literature 6 discloses that chlorogenic acid has an effect of masking off-tastes in various consumables containing vegetables.

Patent Literature 7 discloses that it is possible to mask a grassy smell in vegetables by formulating with lactic acid fermented egg white.

Patent Literature 8 discloses a method for producing a chocolate-like product that contains a fat with highly unsaturated fatty acids, characterized in that a water-soluble antioxidant is added before an atomization step, wherein the water-soluble antioxidant is a catechin.

Patent Literature 9 discloses a confectionery fat having a tea polyphenol content of 100-500 ppm by weight and an emulsifier content of 50-1000 ppm by weight, wherein the emulsifier content is 2 times or less of the tea polyphenol content and the A/N value as obtained according to the following method is 2,0 or higher: A: CDM stability time of confectionery fat containing 100-500 ppm by weight tea polyphenols; N: CDM stability time of the base fat of said A which does not contain tea polyphenols.

Patent Literature 10 discloses a fat for distribution in liquid form that contains high polyunsaturated fatty acids (PUFA) and has a constituent fatty acid composition containing 1-50 wt.% fatty acids comprising five or more double bonds. Additionally it discloses a food product, such as chocolate, in which the above mentioned fat for distribution in liquid form containing high PUFA is used.

### [Reference List]

### [Patent Literature]

Patent Literature 1: Japanese Patent Laid-Open No. 2017-99320
Patent Literature 2: Japanese Patent Laid-Open No. 2008-99677
Patent Literature 3: Japanese Patent Laid-Open No. 2015-116188
Patent Literature 4: Japanese Patent Laid-Open No. 2017-205133
Patent Literature 5: PCT International Publication No. WO 2008/096703
Patent Literature 6: Japanese Patent Laid-Open No. 2018-85990
Patent Literature 7: Japanese Patent Laid-Open No. 2014-64511
Patent Literature 8: WO 2016/194 558 Al
Patent Literature 9: JP 2015 033335 A
Patent Literature 10: 2015 116 189 A

### [Summary of Invention]

### [Technical Problem]

The present invention addresses the problem of providing a food wherein an off-flavor is reduced by an off-flavor reducing agent.

The off-flavor reducing agent can be used for various foods and particularly effectively works for reducing off-flavors in high-cacao chocolate, cereal-derived materials, vegetables, and beverages.

### [Solution to Problem]

In Patent Literature 1 and 2, it is necessary to add a predetermined amount of sugar to foods, and in many cases, there are restrictions on formulations therewith.

In the polyunsaturated fatty acid-containing edible vegetable oils and fats in Patent Literature 3, water-soluble tea polyphenols are added thereto in anticipation of an antioxidant action. However, it is not disclosed that the water-soluble tea polyphenols exhibit an effect of reducing off-flavors such as an astringent taste in other foods.

Patent Literature 4 discloses that sucralose has an effect of masking an unpleasant taste. However, the sucralose itself has sweetness, and in some cases, there are restrictions on formulations therewith when preparing foods.

Patent Literature 5 discloses that "germinated whole fat soybean flour and ungerminated whole fat soybean flour which has not subjected to enzyme deactivation treatment" have an effect of improving the flavor in foods. However, it is generally known that a lipoxygenase is contained in soybean flour, and an action of the lipoxygenase causes an off-flavor. Therefore, it can be thought unlikely that "germinated whole fat soybean flour and ungerminated whole fat soybean flour which has not subjected to enzyme deactivation treatment" have an effect of improving the flavor in foods.

Patent Literature 6 discloses that "chlorogenic acid may be directly added to consumables or may be incorporated into certain components of the consumables in advance" as methods for adding chlorogenic acid thereto. However, chlorogenic acid itself can cause an off-flavor. Therefore, in a case where chlorogenic acid is simply added thereto, even though an off-flavor in vegetables can be masked, an off-flavor of chlorogenic acid may be exhibited. Accordingly, the effect is questionable.

In Patent Literature 7, it is necessary to formulate with lactic acid fermented egg white, which is complicated.

The present inventors have conducted extensive studies in order to develop an agent capable of reducing off-flavors through a simpler method. As a result, they have found that a microdispersion of polyphenol materials in oils and fats exhibits an effect of reducing various kinds of off-flavors even though polyphenol materials usually causes an off-flavor, and have completed the present invention.

Moreover, they have also found that the off-flavor reducing agent effectively works for reducing off-flavors in various foods, especially high-cacao chocolate, cereal-derived materials, vegetables, and beverages.

That is, the present invention is set out in the appended set of claims. The present invention relates to a food, of which an off-flavor is reduced, comprising: 0.1 to 60 mass % of an off-flavor reducing agent, the off-flavor reducing agent comprising aqueous phase particles which contain 1 to 60 mass% of a polyphenol material and are dispersed in an oily phase, wherein the polyphenol material is one or more selected from a hesperidin material, a coffee polyphenol material, a rutin material, and an anthocyanin material, and wherein the food is one or more selected from a high-cacao chocolate having a cacao content greater than or equal to 65 mass%, a vegetable, a beverage, a bean-derived material, a wheat-derived material, a potato-derived material, a rice-derived material, a corn-derived material, and vegetable oils and fats.

The off-flavor reducing agent may be obtained by dissolving an oil-soluble emulsifier in the oily phase.

A method for producing the off-flavor reducing agent includes: dissolving a polyphenol material in water; and finely dispersing the dissolved polyphenol material in an oily phase.

### [Advantageous Effects of Invention]

According to the present disclosure, it is possible to provide an off-flavor reducing agent that reduces off-flavors in various foods through a simple method. In addition, it is possible to provide a food of which an off-flavor is reduced.

The effect is exhibited particularly in food such as high-cacao chocolate, cereal-derived materials, vegetables, or beverages.

### [Description of Embodiments]

An off-flavor reducing agent referred to in the present disclosure is an agent having an effect of reducing off-flavors in various foods. The off-flavor in the present disclosure is a generic term for unfavorable flavors sensed when eaten, and specific examples thereof include excessive bitterness, an astringent taste, and an unpleasant taste. Here, an astringent taste is a stimulus which is felt in the mouth and is also expressed as astringency. In brief, an astringent taste is a typical off-flavor and is a stimulus with a sense that a mucous membrane of the oral cavity has "shrunk", which is felt when an astringent persimmon is taken into the mouth.

More specifically, the astringent taste is a feeling felt when drinking strong tea or a feeling felt when eating chocolate with a high cacao content. The off-flavor reducing agent according to the present disclosure has an effect of reducing various kinds of off-flavors, and has a particularly excellent effect of reducing an astringent taste.

In the present disclosure, if an agent has an effect of reducing an off-flavor, this is referred to as an "off-flavor reducing agent".

It is inferred that the source of the effect of the off-flavor reducing agent according to the present disclosure is a polyphenol material. However, it is necessary that the polyphenol material in the present disclosure be present in an aqueous phase and the aqueous phase with the polyphenol material be dispersed in an oily phase. In many cases, a polyphenol material itself exhibits an off-flavor such as an astringent taste. A food may exhibit an astringent taste, that is, an off-flavor, in a case where a polyphenol material is simply present in the food.

The size of aqueous phase particles in an oily phase is preferably less than or equal to 500 nm and more preferably less than or equal to 300 nm. By having a suitable particle diameter, it is possible to obtain a highly effective off-flavor reducing agent.

The aqueous phase in the present disclosure is obtained by dissolving a water-soluble component in water. In addition, the oily phase is obtained by dissolving an oil-soluble component in oil. In some cases, oils and fats are referred to as an oily phase in a formulation in which no oil-soluble components are used.

Although there is no limitation on oils and fats to be used in an oily phase in the present disclosure, it is possible to use one or more oils and fats from: various vegetable oils and fats including soybean oil, rapeseed oil, rice oil, cottonseed oil, palm oil, palm kernel oil, coconut oil, and cacao butter; animal oils and fats such as beef tallow or pork oil; and oils and fats processed through one or more processes selected from fractionation, hardening, and transesterification of such oils and fats.

In a case of, for example, reducing an off-flavor derived from cacao in high-cacao chocolate in the present disclosure, it is preferable to use cacao butter so as not to affect the hardness of the chocolate. In this manner, it is possible to appropriately select oils and fats depending on the food to be finally used.

In the present disclosure, the polyphenol material refers to a material containing a large amount of polyphenols. Specifically, it is possible to use one or more selected from a hesperidin material, a coffee polyphenol material, a rutin material, and an anthocyanin material. A coffee polyphenol material and a hesperidin material are more preferable, and a coffee polyphenol material is still more preferable. It is possible to obtain a highly effective astringent taste reducing agent using a suitable polyphenol material.

A specific example of the coffee polyphenol material includes a raw coffee bean extract. It is said that an active ingredient of the coffee polyphenol material is chlorogenic acid.

In the off-flavor reducing agent of the present disclosure, it is necessary that aqueous phase particles containing a polyphenol material be dispersed in an oily phase. In the present disclosure, "aqueous phase particles" mentioned simply refer to "aqueous phase particles containing a polyphenol material".

It is necessary that the amount of polyphenol material in an aqueous phase be 1 to 60 mass%. The amount of polyphenol material is more preferably 1.3 to 37 mass% and still more preferably 1.5 to 35 mass%. It is possible to obtain a highly effective off-flavor reducing agent using a suitable amount of polyphenol material present in an aqueous phase.

The proportion of an aqueous phase in the off-flavor reducing agent of the present disclosure varies depending on the amount of polyphenol material in the aqueous phase. Therefore, it is difficult to clearly define the proportion of an aqueous phase. However, in the food according to the present invention, it is preferable that the proportion of an aqueous phase in the off-flavor reducing agent is 0.001 to 20 mass%. The amount thereof is more preferably 0.002 to 15 mass% and still more preferably 0.005 to 10 mass%.

The off-flavor reducing agent according to the present disclosure can be used by being formulated with a food of which an off-flavor is to be reduced. Here, in a case of foods, such as chocolate, which have a relatively large amount of oil, it is possible to use the off-flavor reducing agent in place of a part or all of the oil to be used. In addition, in a case of a food containing little or almost no oil, that is, an aqueous food, the off-flavor reducing agent is dispersed and used.

In the present invention, the food, of which an off-flavor is reduced, is one or more selected from high-cacao chocolate having a cacao content greater than or equal to 65 mass%, a vegetable, a beverage, a bean-derived material, a wheat-derived material, a potato-derived material, a rice-derived material, a corn-derived material and vegetable oils and fats. In the food according to the present invention, the beverage is preferably a coffee beverage or a black tea beverage, and the vegetable is preferably one or more selected from bell peppers, carrots, celery, spinach, kale, cabbage, onions, eggplants, cucumbers, bitter gourd, zucchini, lettuce, leeks, garland chrysanthemum, cauliflower, broccoli, spring onions, and barley leaves.

The cereals in the present disclosure are a generic term for food ingredients obtained from plants and are also called grains. Examples thereof include other various oil crops in addition to beans, wheat, potatoes, rice, and corn. Cereal-derived materials are materials derived from these cereals, and are, for example, vegetable oils and fats derived from other various oil crops in addition to bean-derived materials, wheat-derived materials, potato-derived materials, rice-derived materials, and corn-derived materials. The cereal-derived materials are more preferably bean-derived materials, wheat-derived materials, and various vegetable oils and fats.

More specifically, examples of soybean-derived materials among the bean-derived materials include defatted soybeans, isolated soybean protein materials, concentrated soybean protein materials, granular soybean protein materials, soymilk, soybean flour, and soybean oil; and examples of wheat-derived materials include gluten or wheat bran derived from wheat. Examples of the rice-derived materials include rice flour, rice bran, and rice oil, and examples of the corn-derived materials include corn starch and corn oil. Examples of the various vegetable oils and fats include rapeseed oil, palm oil, sesame oil, and cottonseed oil.

In particular, the soybean-derived materials or wheat-derived materials have a unique flavor which may hinder extensive use of the materials as foods, in some cases. The present disclosure provides a method for reducing an off-flavor in such cereal-derived materials.

In the various vegetable oils and fats, in a case where, for example, the deodorization temperature during refinement is lowered, an off-flavor is sometimes felt from the oils and fats. Here, it is said that the proportion at which trans acids are generated can be lowered in the case where the deodorization temperature during refinement is lowered.

Soybean oil is, for example, a material derived from soybeans, and is literally vegetable oils and fats. Oils and fats not included in the cereal-derived materials which have been exemplified so far are simply listed as the above-described "vegetable oils and fats". However, it is needless to say that various vegetable oils and fats including soybean oil, rice oil, and corn oil are literally included in the "vegetable oils and fats".

In the off-flavor reducing agent according to the present disclosure, it is preferable that an emulsifier be dissolved in an aqueous phase and/or an oily phase. It is particularly preferable that the oil-soluble emulsifier be dissolved in an oily phase. An oil-soluble emulsifier is an emulsifier which dissolves in oils and fats, and refers to an emulsifier having a hydrophilic-lipophilic balance (HLB) of 7 or less in the present disclosure.

As the oil-soluble emulsifier, one or more selected from a polyglycerol ester, a sugar ester, a sorbitan ester, and a monoglycerol fatty acid ester are preferable, a polyglycerol ester, a sugar ester, and a distilled monoglyceride are more preferable, and a polyglycerol ester is particularly preferable. Of these, a polyglycerol condensed ricinoleic acid ester is most preferable. In some cases, the polyglycerol condensed ricinolate is referred to as PGPR.

The amount of the oil-soluble emulsifier in an oily phase is preferably 0.01 to 6 mass% and more preferably 0.01 to 4 mass%. In a case where a suitable amount of a suitable emulsifier is used, water-in-oil type emulsification becomes strong. Therefore, an off-flavor reducing agent capable of efficiently reducing an off-flavor in a food is obtained.

Next, a method for preparing off-flavor reducing agent according to the present disclosure will be described using examples.

In the present disclosure, an aqueous phase is prepared by dissolving a polyphenol material in water. In addition, an oily phase is prepared by dissolving an oil-soluble emulsifier in oils and fats as necessary.

Next, it is possible to obtain an off-flavor reducing agent by mixing the aqueous phase with the oily phase and emulsifying the mixture to form a water-in-oil type emulsion.

The off-flavor reducing agent according to the present disclosure shows an effect of reducing off-flavors in various foods by being added to the foods exhibiting the off-flavor. The effect can be appropriately adjusted depending on the concentration of a polyphenol material in an aqueous phase, the amount of the aqueous phase, or the amount of the off-flavor reducing agent itself used. The degree of an off-flavor or the desired degree of reduction varies depending on foods to be used, and can be appropriately adjusted by those skilled in the art as necessary.

The technology of the off-flavor reducing agent according to the present disclosure can be typically used for a high-cacao chocolate-like food. The high-cacao chocolate-like food in the present disclosure refers to a chocolate-like food having a cacao content greater than or equal to 65 mass%. In this case, an effect of reducing an off-flavor is exhibited using a polyphenol material present in the high-cacao chocolate-like food in a state where aqueous phase particles containing 1 to 60 mass% of the polyphenol material are dispersed in an oily phase. The amount of aqueous phase particles contained in the high-cacao chocolate-like food is preferably 0.001 to 0.01 mass%. Oils and fats to be used in the oily phase are preferably cacao butter.

The off-flavor in the high-cacao chocolate typically has an astringent taste.

In a case of using the off-flavor reducing agent according to the present disclosure for reducing off-flavors derived from cereals, the amount of aqueous phase particles in a food containing a cereal-derived material is preferably 0.0001 to 0.03 mass%, more preferably 0.0002 to 0.02 mass%, and still more preferably 0.0003 to 0.01 mass%. By incorporating a suitable amount of the aqueous phase particles, it is possible to efficiently reduce an off-flavor derived from the cereal-derived material.

In a case of using the off-flavor reducing technology according to the present disclosure for reducing off-flavors derived from cereals, it is possible to typically suitably use the technology for a food in which a material using soybeans as raw materials is used. Examples of the material using soybeans as raw materials include soymilk, a granular soybean protein material, an isolated soybean protein material, a concentrated soybean protein material, a fibrous soybean protein material, soybean curd residue, and soybean oil. Here, the soymilk includes those extracted from whole soybeans, defatted soymilk extracted from defatted soybeans, and powder products thereof. In addition, the granular soybean protein material is a material obtained by molding a soybean-derived raw material including defatted soybeans using an extrusion molding machine such as an extruder. The isolated soybean protein material is a material obtained by mainly making soybean proteins, isolated from soymilk through isoelectric precipitation, into powder. The concentrated soybean protein material is obtained by removing sugars and other soluble components from defatted soybean flour through alcohol cleaning or acid cleaning. The fibrous soybean protein material is obtained by dissolving an isolated soybean protein material in an alkaline solution, extruding the dissolved material through small holes in an acid liquid, and collecting the extruded fibrous material. The soybean curd residue mainly consists of insoluble fibers after extracting oils and fats, soybean proteins, or the like from soybeans. The defatted soybean flour is obtained by making defatted soybeans into powder.

By applying the present disclosure when producing foods in which these materials using soybeans as raw materials are used or when producing these soybean-derived materials themselves, it is possible to reduce off-flavors in the soybean-derived materials.

In a case of using the off-flavor reducing agent according to the present disclosure for reducing off-flavors in, for example, vegetable juice, derived from vegetables, it is possible to reduce the off-flavor by dispersing a water-in-oil type emulsion according to the present disclosure. In addition, a dressing can be prepared using the water-in-oil type emulsion according to the present disclosure and can be eaten by being directly poured over vegetables. Accordingly, it is possible to reduce the off-flavor derived from the vegetables.

The content of aqueous phase particles in this case can be appropriately set depending on the amount of polyphenol in the aqueous phase or the degree of an off-flavor in a target vegetable. In some cases, a polyphenol itself is a material exhibiting an off-flavor. However, in the present disclosure, the polyphenol material is present in a state where an aqueous phase in which the polyphenol material is present is dispersed in an oily phase. Therefore, there is a low probability that the polyphenol material will cause an off-flavor.

The amount of aqueous phase particles to be used in a food containing a vegetable or a vegetable-derived material is preferably 0.0001 to 0.05 mass%, more preferably 0.0003 to 0.04 mass%, and still more preferably 0.0005 to 0.02 mass%. By incorporating a suitable amount of the aqueous phase particles, it is possible to efficiently reduce an off-flavor derived from the vegetable.

In a case of applying the present invention to beverages, a coffee beverage or a black tea beverage, in which polyphenols are sometimes recognized as exhibiting an off-flavor, is preferable as a target beverage.

Here, the coffee beverage is a beverage containing components extracted from roasted coffee beans, and includes cafe au lait, coffee milk, and cafe latte in addition to coffee itself. In addition, the black tea beverage is a beverage containing components extracted from black tea leaves, and includes milk tea and lemon tea in addition to black tea itself.

By providing the present invention to such beverages, a prominent off-flavor reducing effect is observed, which is preferable.

In the present disclosure, 0.0001 to 0.001 mass% of aqueous phase particles containing a predetermined amount of polyphenol material is preferably contained in a beverage. The amount thereof is more preferably 0.0002 to 0.0008 mass% and still more preferably 0.0002 to 0.0007 mass%. By incorporating a suitable amount of the aqueous phase particles, an effect of reducing an off-flavor in the beverage is exhibited.

Next, a method for applying the technology of the present disclosure to each food will be described. In a case of applying the present disclosure to a chocolate, it is possible to reduce its offflavor by adding the off-flavor reducing agent according to the present disclosure thereto in the preparation process of the chocolate. In a case where the present disclosure is used for reducing off-flavors derived from cereals, an effect of reducing off-flavors in various cereal-derived materials is exhibited by adding the above-described agent to the cereal-derived materials exhibiting the off-flavor. The effect can be appropriately adjusted depending on the concentration of a polyphenol material in an aqueous phase, the amount of the aqueous phase, or the amount of the off-flavor reducing agent itself used. The degree of an off-flavor or the desired degree of reduction varies depending on cereal-derived materials to be used, and can be appropriately adjusted by those skilled in the art as necessary.

In addition, it is possible to reduce off-flavors in cereal-derived materials by similarly adding the agent to foods containing the cereal-derived materials.

In a case of applying the present disclosure to vegetables, an effect of reducing off-flavors in various vegetables or vegetable-derived materials is exhibited by adding the off-flavor reducing agent according to the present disclosure to the vegetables or the vegetable-derived materials exhibiting the off-flavor. The effect can be appropriately adjusted depending on the concentration of a polyphenol material in an aqueous phase, the amount of the aqueous phase, or the amount of the off-flavor reducing agent itself used. The degree of an off-flavor or the desired degree of reduction varies depending on vegetables to be used, and can be appropriately adjusted by those skilled in the art as necessary.

In addition, it is possible to reduce off-flavors in vegetables by similarly adding the agent to foods containing the vegetables.

In a case of applying the present disclosure to beverages, the off-flavor reducing agent according to the present disclosure is added to various beverages. In this case, the off-flavor reducing agent is a water-in-oil type emulsion while the beverages are water-based, and therefore, the off-flavor reducing agent is not easily mixed with the beverages. For this reason, it is necessary to emulsify the mixture using various emulsifiers after adding the off-flavor reducing agent to the beverages.

The beverages obtained in this manner have reduced off-flavors and exhibit favorable flavors.

Examples are described below.

### Examples

### Examination 1: Preparation of Off-Flavor Reducing Agent Samples

Off-flavor reducing agent samples were prepared according to the formulations of Table 1-1. The preparation method was performed according to "• Preparation Method 1 of Off-Flavor Reducing Agent Samples".

**Table 1-1: Formulations**

| | | Comparative Example 1-1 | Example 1-1* | Example 1-2 | Example 1-3 | Comparative Example 1-2 | Example 1-4 |
|---|---|---|---|---|---|---|---|
| Oily phase | Cocoa butter | 100.000 | 99.940 | 99.886 | 99.877 | 99.886 | 99.889 |
| | Oil-soluble emulsifier | - | 0.015 | 0.045 | 0.045 | 0.045 | 0.045 |
| Aqueous phase | Water | - | 0.036 | 0.060 | 0.060 | 0.060 | 0.060 |
| | Isoflavone material | - | 0.009 | - | - | - | - |
| | Hesperidin material | - | - | 0.009 | 0.018 | - | 0.006 |
| | Anthocyanin material | - | - | - | - | 0.009 | |
| Total | | 100.00 | 100.00 | 100.00 | 100.00 | 100.00 | 100.00 |
| Amount (mass%) of polyphenol material in aqueous phase | | - | 20.0% | 13.0% | 23.1% | 13.0% | 9.1% |
| Proportion (mass%) of aqueous phase | | - | 0.05 | 0.07 | 0.08 | 0.07 | 0.07 |

| | | Example 1-5* | Example 1-6 | Example 1-7 | Example 1-8* | Example 1-9* | Example 1-10 |
|---|---|---|---|---|---|---|---|
| Oily phase | Cocoa butter | 99.893 | 99.892 | 99.880 | 99.887 | 99.940 | 99.951 |
| | Oil-soluble emulsifier | 0.045 | 0.045 | 0.045 | 0.045 | 0.015 | 0.015 |
| Aqueous phase | Water | 0.060 | 0.060 | 0.060 | 0.060 | 0.027 | 0.030 |
| | Catechin material | - | - | - | - | 0.018 | - |
| | Anthocyanin material | - | - | - | - | - | 0.005 |
| | Oligonol material | 0.002 | - | - | - | - | - |
| | Raw coffee bean extract | - | 0.003 | 0.015 | - | - | - |
| | Cacao extract | - | - | - | 0.008 | - | - |
| Total | | 100.000 | 100.000 | 100.000 | 100.000 | 100.000 | 100.000 |
| Amount (mass%) of polyphenol material in aqueous phase | | 2.6% | 4.8% | 20.0% | 11.1% | 40.0% | 13.0% |
| Proportion (mass%) of aqueous phase | | 0.062 | 0.063 | 0.075 | 0.068 | 0.045 | 0.035 |

| | | | | | | | |
|---|---|---|---|---|---|---|---|
| *Not according to the present invention (Unit for formulations is mass%) | | | | | | | |

· A polyglycerol condensed ricinoleic acid ester "POEM PR-100" (HLB: 1) manufactured by RIKEN VITAMIN CO., LTD. was used as the oil-soluble emulsifier.
· "Soyaflavone HG" manufactured by FUJI OIL CO., LTD. was used as the isoflavone material.
· "αG Hesperidin" manufactured by Toyo Sugar Refining Co., Ltd. was used as the hesperidin material.
· "Powdered Grape Extract HA" manufactured by San-Ei Gen F.F.I., Inc. was used as the anthocyanin material.
· "OLG-F" manufactured by Amino Up Chemical Co., Ltd. was used as the oligonol material.
· A coffee polyphenol material "Raw Coffee Bean Extract-P" manufactured by Oryza Oil & Fat Chemical Co., Ltd. was used as the raw coffee bean extract.
· A cacao polyphenol material "Cacao Extract-WSP" manufactured by Oryza Oil & Fat Chemical Co., Ltd. was used as the cacao extract.
· "Sunphenon 90S" manufactured by Taiyo Kagaku Co., Ltd. was used as the catechin material.

### • Preparation Method 1 of Off-Flavor Reducing Agent Samples

1. Raw materials classified into the oily phase in the formulations were melted and mixed with each other to prepare an oily phase.
2. Raw materials classified into the aqueous phase in the formulations were dissolved in water to prepare an aqueous phase.
3. The aqueous phase was mixed with the oily phase, and the mixture was emulsified to form a water-in-oil type emulsion.

### Examination 2: Evaluation of Off-Flavor Reducing Agent Samples

Chocolates were prepared using the off-flavor reducing agent samples prepared in Examination 1 to verify the effect.

The formulations of the chocolates are shown in Table 2-1. In addition, the chocolates were prepared according to "• Preparation Method 2 of Chocolate Samples".

The prepared chocolate samples were evaluated in comparison with Comparative Example 2-1 by five panelists and were scored according to the following criteria after consultation. The results are shown in Table 2-2.

### Evaluation of Chocolate Samples

3 Points: It was felt that an off-flavor was greatly reduced compared to that of Comparative Example 2-1.
2 Points: It was felt that an off-flavor was reduced compared to that of Comparative Example 2-1.
1 Point: It was felt that there was an equivalent or greater off-flavor than that of Comparative Example 2-1.

Two or more points were considered to be acceptable.

**Table 2-1: Formulations of Chocolates**

| | Comparative Example 2-1 | Example 2-1 * | Example 2-2 | Example 2-3 | Comparative Example 2-2 | Example 2-4 |
|---|---|---|---|---|---|---|
| Sample of Comparative Example 1-1 | 5.0 | - | - | - | - | - |
| Sample of Example 1-1* | - | 5.0 | - | - | - | - |
| Sample of Example 1-2 | - | - | 5.0 | - | - | - |
| Sample of Example 1-3 | - | - | - | 5.0 | - | - |
| Sample of Comparative Example 1-2 | - | - | - | - | 5.0 | - |
| Sample of Example 1-4 | - | - | - | - | - | 5.0 |
| Cacao mass | 70.4 | 70.4 | 70.4 | 70.4 | 70.4 | 70.4 |
| Sugar | 23.2 | 23.2 | 23.2 | 23.2 | 23.2 | 23.2 |
| Cocoa butter | 1.4 | 1.4 | 1.4 | 1.4 | 1.4 | 1.4 |
| Total | 100.0 | 100.0 | 100.0 | 100.0 | 100.0 | 100.0 |
| Amount (mass%: calculation value) of aqueous phase particles in chocolate | - | 0.0023 | 0.0035 | 0.0039 | 0.0035 | 0.0033 |

| | Example 2-5 * | Example 2-6 | Example 2-7 | Example 2-8* | Example 2-9* | Example 2-10 |
|---|---|---|---|---|---|---|
| Sample of Example 1-5* | 5.0 | - | - | - | - | - |
| Sample of Example 1-6 | - | 5.0 | - | - | - | - |
| Sample of Example 1-7 | - | - | 5.0 | - | - | - |
| Sample of Example 1-8* | - | - | - | 5.0 | - | - |
| Sample of Example 1-9* | - | - | - | - | 5.0 | - |
| Sample of Example 1-10 | - | - | - | - | - | 5.0 |
| Cacao mass | 70.4 | 70.4 | 70.4 | 70.4 | 70.4 | 70.4 |
| Sugar | 23.2 | 23.2 | 23.2 | 23.2 | 23.2 | 23.2 |
| Cocoa butter | 1.4 | 1.4 | 1.4 | 1.4 | 1.4 | 1.4 |
| Total | 100.0 | 100.0 | 100.0 | 100.0 | 100.0 | 100.0 |
| Amount (mass%: calculation value) of aqueous phase particles in chocolate | 0.0031 | 0.0032 | 0.0038 | 0.0034 | 0.0023 | 0.0017 |

| | | | | | | |
|---|---|---|---|---|---|---|
| * not according to the present invention(Unit for formulations is mass%) | | | | | | |

· "Cacao Mass GB100" manufactured by FUJI OIL CO., LTD. was used as the cacao mass.

### • Preparation Method 2 of Chocolate Samples

1. Cacao mass, sugar, and cocoa butter were mixed with each other with a kneader.
2. The mixture was refined with a roll refiner.
3. Conching was performed.
4. Each "off-flavor reducing agent sample" was added thereto, and the mixture was melted and mixed at 50°C to 60°C.
5. The temperature was adjusted to 31°C.
6. 0.2 weight% of "Choco Seed A" manufactured by FUJI OIL CO., LTD. was added to each chocolate sample for tempering.
7. A mold was filled with each mixture, the temperature was cooled to 10°C for 30 minutes, and the mixture was then demolded.
8. The demolded mixture was aged at 20°C for 1 week.

**Table 2-2: Results**

| | Comparative Example 2-1 | Example 2-1 * | Example 2-2 | Example 2-3 | Comparative Example 2-2 | Example 2-4 |
|---|---|---|---|---|---|---|
| Evaluation results | - | 2 | 3 | 3 | 1 | 3 |

| | Example 2-5* | Example 2-6 | Example 2-7 | Example 2-8* | Example 2-9* | Example 2-10 |
|---|---|---|---|---|---|---|
| Evaluation results | 2 | 3 | 3 | 2 | 2 | 2 |

| | | | | | | |
|---|---|---|---|---|---|---|
| *not according to the invention | | | | | | |

### Consideration

· The effect of the off-flavor reducing agent according to the present disclosure was normally confirmed in the high-cacao chocolate from which off-flavors were normally felt.
· As shown in Table 2-2, it has become clear that it is possible to reduce off-flavors in the high-cacao chocolate by formulating with a predetermined amount of off-flavor reducing agents containing polyphenols which are formulated therein and have an off-flavor on their own.

### Examination 3: Preparation of Off-Flavor Reducing Agent Samples

Off-flavor reducing agent samples were prepared according to the formulations of Table 3-1. The preparation method was performed according to "• Preparation Method 1 of Off-Flavor Reducing Agent Samples".

**Table 3-1: Formulations**

| | | Comparative Example 3-1 | Example 3-1 | Example 3-2 |
|---|---|---|---|---|
| Oily phase | Oils and fats 1 | 100.00 | 99.9505 | 99.9505 |
| | Oil-soluble emulsifier | - | 0.015 | 0.015 |
| Aqueous phase | Water | - | 0.03 | 0.03 |
| | Hesperidin material | - | 0.0045 | - |
| | Anthocyanin material | - | - | 0.0045 |
| Total | | 100.00 | 100.00 | 100.00 |
| Amount (mass%) of polyphenol material in aqueous phase | | - | 13.0% | 13.0% |
| Proportion (mass%) of aqueous phase | | - | 0.035 | 0.035 |

| | | | | |
|---|---|---|---|---|
| (Unit for formulations is mass%) | | | | |

· A mixture of coconut oil and super palm olein was used as the oils and fats 1.
· A polyglycerol condensed ricinoleic acid ester "POEM PR-100" (HLB: 1) manufactured by RIKEN VITAMIN CO., LTD. was used as the oil-soluble emulsifier.
· "αG Hesperidin" manufactured by Toyo Sugar Refining Co., Ltd. was used as the hesperidin material.
· "Powdered Grape Extract HA" manufactured by San-Ei Gen F.F.I., Inc. was used as the anthocyanin material.

### Examination 4: Evaluation of Off-Flavor Reducing Agent Samples

Ice-coating chocolates (hereinafter, referred to as IC's) were prepared using the off-flavor reducing agent samples prepared in Examination 3. Frozen desserts were actually coated with the ice-coating chocolates to verify the effect.

The IC formulations are shown in Table 4-1. In addition, the IC's were prepared according to "• Preparation Method of IC Samples".

After the obtained IC samples dissolved completely, the temperature was adjusted to 50°C. Then, "LOTTE Hokkaido Vanilla Bars" were coated therewith and stored at -20°C. On the next day or later, the evaluation was performed according to "• Evaluation Method of IC-Coated Ices". The results are shown in Table 4-2

**Table 4-1: IC Formulations**

| | Comparative Example 4-1 | Example 4-1 | Example 4-2 |
|---|---|---|---|
| Sample of Comparative Example 3-1 | 5.0 | - | - |
| Sample of Example 3-1 | - | 5.0 | - |
| Sample of Example 3-2 | - | - | 5.0 |
| Cocoa | 28.5 | 28.5 | 28.5 |
| Sugar | 13.7 | 13.7 | 13.7 |
| Lactose | 2.9 | 2.9 | 2.9 |
| Oils and fats 2 | 49.9 | 49.9 | 49.9 |
| Total | 100.0 | 100.0 | 100.0 |
| Amount (mass%: calculation value) of aqueous phase particles in IC | - | 0.001725 | 0.001725 |

| | | | |
|---|---|---|---|
| (Unit for formulations is mass%) | | | |

· A mixture of liquid oil and hardened oil was used as the oils and fats 2

### • Preparation Method of IC Samples

1. Cocoa, sugar, lactose, and oils and fats were mixed with each other with a kneader.
2. The mixture was refined with a roll refiner.
3. Conching was performed.
4. Each "off-flavor reducing agent sample" was added thereto, and the mixture was melted and mixed at 50°C to 60°C.

### • Evaluation Method of IC-Coated Ices

Three panelists ate the IC-coated ices while having a sample coated with the IC of Comparative Example 4-1 as a target to be compared, and the IC-coated ices were scored according to the following criteria after consultation.
"Regarding Chocolate Flavor"
o: An improvement effect was observed.
Δ : There was no improvement effect.
x: Flavors deteriorated.
"Regarding Astringent Taste (Off-Flavor)"
o: An improvement effect was observed.
Δ: There was no improvement effect.
x: Flavors deteriorated.
Samples scored A in any item were determined to be acceptable.

**Table 4-2: Results**

| | Comparative Example 4-1 | Example 4-1 | Example 4-2 |
|---|---|---|---|
| Chocolate flavor | - | o | o |
| Astringent taste (off-flavor) | - | o | o |

### Consideration

· It has become clear that the addition of the off-flavor reducing agent according to the present disclosure not only reduces an astringent taste (off-flavor) but also reduces other kinds of off-flavors, thereby improving chocolate flavors as well.

### Examination 5: Evaluation of Off-Flavor Reducing Agent Samples

The effect of improving flavors in chocolate ices was verified using the off-flavor reducing agent samples prepared in Examination 3. The method was performed according to "• Method for Verifying Effect of Improving Flavors in Chocolate Ices". The results are shown in Table 5-1.

### • Method for Verifying Effect of Improving Flavors in Chocolate Ices

1. Commercially available ices (MORINAGA MILK INDUSTRY CO., LTD., MOW Chocolate, 100% Ecuadorian cacao) were completely dissolved.
2. The resultants were heated to 80°C.
3. An amount corresponding to 2 mass% of each of the off-flavor reducing agent samples obtained in Examination 3 was added to each ice.
4. Each mixture was stirred with a homomixer at 8,000 rpm × 10 minutes.
5. The resultant was cooled to 5°C, and was then frozen in an ice creamer.
6. After the resultant was dispensed into containers, the dispensed resultants were cured in a shock freezer (-40°C).
7. The cured resultants were stored at -20°C.
8. On the next day or later, the resultants were tasted and evaluated.

The tasting was performed by three panelists, and the samples were scored according to the following criteria after consultation.
"Regarding Chocolate Flavor"
o: An improvement effect was observed.
Δ: There was no improvement effect.
x: Flavors deteriorated.
"Regarding Astringent Taste (Off-Flavor)"
o: An improvement effect was observed.
Δ: There was no improvement effect.
x: Flavors deteriorated.
Samples scored A in any item were determined to be acceptable.

**Table 5-1: Results**

| | Comparative Example 5-1 | Example 5-1 | Example 5-2 |
|---|---|---|---|
| | Use of sample of Comparative Example 3-1 | Use of sample of Example 3-1 | Use of sample of Example 3-2 |
| Chocolate flavor | - | o | o |
| Astringent taste (off-flavor) | - | o | o |

### Consideration

· It has become clear that the addition of the off-flavor reducing agent according to the present disclosure not only reduces an astringent taste (off-flavor) but also reduces other kinds of off-flavors, thereby improving chocolate flavor as well.

### Examination 6: Preparation of Off-Flavor Reducing Agent Samples

Off-flavor reducing agent samples were prepared according to the formulations of Table 6-1. The preparation method was performed according to "• Preparation Method 6 of Off-Flavor Reducing Agent Samples".

**Table 6-1: Formulations**

| | | Comparative Example 6-1 | Example 6-1 | Example 6-2 | Example 6-3 | Example 6-4 |
|---|---|---|---|---|---|---|
| Oily phase | Vegetable oils and fats | 100 | 99.9505 | 99.7525 | 99.9505 | 99.7525 |
| | Oil-soluble emulsifier | - | 0.015 | 0.075 | 0.015 | 0.075 |
| Aqueous phase | Water | - | 0.03 | 0.15 | 0.03 | 0.15 |
| | Anthocyanin material | - | 0.0045 | 0.0225 | - | - |
| | Hesperidin material | - | - | - | 0.0045 | 0.0225 |
| Total | | 100 | 100 | 100 | 100 | 100 |
| Proportion (mass%) of aqueous phase | | - | 0.0345 | 0.1725 | 0.0345 | 0.1725 |
| Amount (mass%) of polyphenol material in aqueous phase | | - | 13.0% | 13.0% | 13.0% | 13.0% |

| | | | | | | |
|---|---|---|---|---|---|---|
| (Unit for formulations is mass%) | | | | | | |

· Super palm olein "Palm Ace 10" manufactured by FUJI OIL CO., LTD. was used as the vegetable oils and fats.
· A polyglycerol condensed ricinoleic acid ester "CRS-75" manufactured by Sakamoto Yakuhin Kogyo Co., Ltd. was used as the oil-soluble emulsifier.
· "Powdered Grape Extract HA" manufactured by San-Ei Gen F.F.I., Inc. was used as the anthocyanin material.
· "αG Hesperidin" manufactured by Toyo Sugar Refining Co., Ltd. was used as the hesperidin material.

### • Preparation Method 6 of Off-Flavor Reducing Agent Samples

1. Raw materials classified into the oily phase in the formulations were melted and mixed with each other to prepare an oily phase.
2. Raw materials classified into the aqueous phase in the formulations were dissolved in water to prepare an aqueous phase.
3. The aqueous phase was mixed with the oily phase, and the mixture was emulsified to form a water-in-oil type emulsion.

### Examination 7: Evaluation of Off-Flavor Reducing Agent Samples

High protein creams which contained a soybean protein material formulated therein and were shown in Table 7-1 were prepared using the off-flavor reducing agent samples prepared in Examination 6, and were subjected to sensory evaluation.

The high protein creams were prepared according to "• Preparation Method of High Protein Creams". In addition, the sensory evaluation was performed according to "• Sensory Evaluation Method 7". The results are shown in Table 7-2.

**Table 7-1: Formulations of High Protein Creams**

| | Comparative Example 7-1 | Example 7-1 | Example 7-2 | Example 7-3 | Example 7-4 |
|---|---|---|---|---|---|
| Soybean protein material | 30 | 30 | 30 | 30 | 30 |
| Whole milk powder | 10 | 10 | 10 | 10 | 10 |
| Sugar | 20 | 20 | 20 | 20 | 20 |
| Vegetable oils and fats | 35 | 35 | 35 | 35 | 35 |
| Sample of Comparative Example 6-1 | 5 | - | - | - | - |
| Sample of Example 6-1 | - | 5 | - | - | - |
| Sample of Example 6-2 | - | - | 5 | - | - |
| Sample of Example 6-3 | - | - | - | 5 | - |
| Sample of Example 6-4 | - | - | - | - | 5 |
| Lecithin and vanillin | Suitable amount | Suitable amount | Suitable amount | Suitable amount | Suitable amount |
| Total | 100 | 100 | 100 | 100 | 100 |
| Amount (mass%) of aqueous phase particles derived from off-flavor reducing agent sample | - | 0.001725 | 0.008625 | 0.001725 | 0.008625 |

| | | | | | |
|---|---|---|---|---|---|
| (Unit for formulations is mass%) | | | | | |

· An isolated soybean protein material "Proleena 900" manufactured by FUJI OIL CO., LTD. was used as the soybean protein material.
· "Perkid N" manufactured by FUJI OIL CO., LTD. was used as the vegetable oils and fats.
· The amount of lecithin and vanillin was very small and indicated as "Suitable amount".

### • Preparation Method of High Protein Creams

1. A soybean protein material, whole milk powder, sugar, and vegetable oils and fats were mixed with each other with a kneader.
2. The mixture was refined with a roll refiner.
3. Conching was performed.
4. Each "off-flavor reducing agent sample" was added thereto and mixed therewith, and an aluminum cup was filled with the mixture.
5. The mixture was cooled to 10°C for 10 minutes.
6. The mixture was aged at 20°C for 1 week.

### • Sensory Evaluation Method 7

Prepared samples were subjected to sensory evaluation by three panelists and scored according to the following criteria after consultation.
3 Points: It was felt that an astringent taste and a grassy smell were greatly reduced compared to those of Comparative Example 7-1.
2 Points: It was felt that an astringent taste and a grassy smell were reduced compared to those of Comparative Example 7-1.
1 Point: It was felt that there was an equivalent or greater astringent taste and grassy smell than those of Comparative Example 7-1.

Two or more points were considered to be acceptable.

**Table 7-2: Results**

| | Comparative Example 7-1 | Example 7-1 | Example 7-2 | Example 7-3 | Example 7-4 |
|---|---|---|---|---|---|
| Evaluation | - | 2 | 3 | 2 | 3 |

### Consideration

It was confirmed that an off-flavor resulting from the isolated soybean protein material can be greatly reduced using the off-flavor reducing agent according to the present invention.

### Examination 8: Evaluation of Off-Flavor Reducing Agent Samples

"Strawberry-flavored bits" shown in Table 8-1 in which a granular soybean protein material was used were prepared using the off-flavor reducing agent samples prepared in Examination 6, and were subjected to sensory evaluation.

The strawberry-flavored bits were prepared according to "• Preparation Method of Strawberry-Flavored Bits". In addition, the sensory evaluation was performed according to "• Sensory Evaluation Method 8". The results are shown in Table 8-2.

**Table 8-1: Formulations**

| | Comparative Example 8-1 | Example 8-1 |
|---|---|---|
| Granular soybean protein material | 23 | 23 |
| Strawberry juice | 2.3 | 2.3 |
| Water | 62.1 | 62.1 |
| Flavorings, coloring, sweeteners, and acidifiers | 8 | 8 |
| Vegetable oils and fats | 4.6 | - |
| Sample of Example 6-3 | - | 4.6 |
| Total | 100 | 100 |
| Amount (mass%) of aqueous phase particles derived from off-flavor reducing agent sample | - | 0.001587 |

| | | |
|---|---|---|
| (Unit for formulations is mass%) | | |

· Super palm olein "Palm Ace 10" manufactured by FUJI OIL CO., LTD. was used as the vegetable oils and fats.
"Apex 300" manufactured by FUJI OIL CO., LTD. was used as the granular soybean protein material.

### • Preparation Method of Strawberry-Flavored Bits

1. Raw materials other than a granular soybean protein material and flavorings were mixed with each other and heated until boiling.
2. The granular soybean protein material was added thereto, and the mixture was heated over a low heat for 15 minutes.
3. Water contents were drained, and the remainder was dried for 15 hours at 60°C.
4. The flavorings were added thereto.

### • Sensory Evaluation Method 8

Three panelists ate the samples which were then scored in comparison with Comparative Example 8-1 according to the following criteria after consultation between the panelists.
3 Points: It was felt that an astringent taste and a grassy smell were greatly reduced compared to those of Comparative Example 8-1.
2 Points: It was felt that an astringent taste and a grassy smell were reduced compared to those of Comparative Example 8-1.
1 Point: It was felt that there was an equivalent or greater astringent taste and grassy smell than those of Comparative Example 8-1.

Two or more points were considered to be acceptable.

**Table 8-2**

| | Comparative Example 8-1 | Example 8-1 |
|---|---|---|
| Sensory evaluation results | - | 3 |

### Consideration

It was confirmed that an off-flavor resulting from the granular soybean protein material can be greatly reduced using the off-flavor reducing agent according to the present disclosure.

### Examination 9: Preparation of Off-Flavor Reducing Agent Samples

Off-flavor reducing agent samples were prepared according to the formulations of Table 9-1. The preparation method was performed according to "• Preparation Method 6 of Off-Flavor Reducing Agent Samples".

**Table 9-1: Formulations**

| | | Comparative Example 9-1 | Example 9-1 | Example 9-2 |
|---|---|---|---|---|
| Oily phase | Vegetable oils and fats 1 | - | 1.4505 | 1.4505 |
| | Vegetable oils and fats 2 | 100 | 98.5 | 98.5 |
| | Oil-soluble emulsifier | - | 0.015 | 0.015 |
| Aqueous phase | Water | - | 0.03 | 0.03 |
| | Anthocyanin material | - | 0.0045 | - |
| | Hesperidin material | - | - | 0.0045 |
| Total | | 100 | 100 | 100 |
| Proportion (mass%) of aqueous phase | | - | 0.0345 | 0.0345 |
| Amount (mass%) of polyphenol material in aqueous phase | | - | 13.0% | 13.0% |

| | | | | |
|---|---|---|---|---|
| (Unit for formulations is mass%) | | | | |

· Super palm olein "Palm Ace 10" manufactured by FUJI OIL CO., LTD. was used as the vegetable oils and fats 1.
· "Purified Coconut Oil" manufactured by FUJI OIL CO., LTD. was used as the vegetable oils and fats 2.
· A polyglycerol condensed ricinoleic acid ester "CRS-75" manufactured by Sakamoto Yakuhin Kogyo Co., Ltd. was used as the oil-soluble emulsifier.
· "Powdered Grape Extract HA" manufactured by San-Ei Gen F.F.I., Inc. was used as the anthocyanin material.
· "αG Hesperidin" manufactured by Toyo Sugar Refining Co., Ltd. was used as the hesperidin material.

### Examination 10: Evaluation of Off-Flavor Reducing Agent Samples

Soymilk-based beverages shown in Table 10-1 were prepared using the off-flavor reducing agent samples prepared in Examination 9, and were subjected to sensory evaluation.

The soymilk-based beverages were prepared according to "• Preparation Method of Soymilk-Based Beverages". In addition, the sensory evaluation was performed according to "• Sensory Evaluation Method 10". The results are shown in Table 10-2.

**Table 10-1: Formulations**

| | Comparative Example 10-1 | Example 10-1 | Example 10-2 |
|---|---|---|---|
| Plain soybean milk | 97.8 | 97.8 | 97.8 |
| Sample of Comparative Example 9-1 | 2 | - | - |
| Sample of Example 9-1 | - | 2 | - |
| Sample of Example 9-2 | - | - | 2 |
| Water-soluble emulsifier | 0.2 | 0.2 | 0.2 |
| Total | 100 | 100 | 100 |
| Amount (mass%) of aqueous phase particles derived from off-flavor reducing agent sample | - | 0.00069 | 0.00069 |

| | | | |
|---|---|---|---|
| (Unit for formulations is mass%) | | | |

· "Plain Soymilk" manufactured by Kikkoman Corporation was used as the plain soymilk.
· A sugar ester "Ester S1670" manufactured by MITSUBISHI-CHEMICAL FOODS CORPORATION was used as the water-soluble emulsifier.

### • Preparation Method of Soymilk-Based Beverages

1. Plain soymilk was heated to 60°C.
2. A water-soluble emulsifier was added thereto, and the mixture was stirred with a homomixer.
3. Each oil and fat composition sample was added thereto, and the mixture was further stirred.
4. The resultant was cooled to 10°C.

### • Sensory Evaluation Method 10

Three panelists ate the samples which were then scored in comparison with Comparative Example 10-1 according to the following criteria after consultation between the panelists.
3 Points: It was felt that an astringent taste and a grassy smell were greatly reduced compared to those of Comparative Example 10-1.
2 Points: It was felt that an astringent taste and a grassy smell were reduced compared to those of Comparative Example 10-1.
1 Point: It was felt that there was an equivalent or greater astringent taste and grassy smell than those of Comparative Example 10-1.

Two or more points were considered to be acceptable.

**Table 10-2: Results**

| | Comparative Example 10-1 | Example 10-1 | Example 10-2 |
|---|---|---|---|
| Sensory evaluation results | - | 3 | 3 |

### Consideration

It was confirmed that an off-flavor resulting from the soymilk can be greatly reduced using the off-flavor reducing agent according to the present disclosure.

### Examination 11: Preparation of Off-Flavor Reducing Agent Samples

Off-flavor reducing agent samples were prepared according to the formulations of Table 11-1. The preparation method was performed according to "• Preparation Method 6 of Off-Flavor Reducing Agent Samples".

**Table 11-1: Formulations**

| | | Example 11-1 | Example 11-2 | Example 11-3 | Example 11-4 | Example 11-5 |
|---|---|---|---|---|---|---|
| Oily phase | Oils and fats | 99.909 | 99.817 | 99.634 | 99.909 | 99.817 |
| | Oil-soluble emulsifier | 0.023 | 0.046 | 0.091 | 0.023 | 0.046 |
| Aqueous phase | Water | 0.055 | 0.110 | 0.219 | 0.055 | 0.110 |
| | Hesperidin material | 0.014 | 0.027 | 0.055 | - | - |
| | Rutin material | - | - | - | 0.014 | 0.027 |
| Total | | 100.000 | 100.000 | 100.000 | 100.000 | 100.000 |
| Proportion (mass%) of aqueous phase | | 0.069 | 0.137 | 0.274 | 0.069 | 0.137 |
| Amount (mass%) of polyphenol material in aqueous phase | | 20.0% | 20.0% | 20.0% | 20.0% | 20.0% |

| | | | | | | |
|---|---|---|---|---|---|---|
| (Unit for formulations is mass%) | | | | | | |

· Super palm olein "Palm Ace 10" manufactured by FUJI OIL CO., LTD. was used as the oils and fats.
· A polyglycerol condensed ricinoleic acid ester "CRS-75" manufactured by Sakamoto Yakuhin Kogyo Co., Ltd. was used as the oil-soluble emulsifier.
· "αG Hesperidin" manufactured by Toyo Sugar Refining Co., Ltd. was used as the hesperidin material.
· "αG Rutin PS" manufactured by Toyo Sugar Refining Co., Ltd. was used as the rutin material.

### Examination 12: Evaluation of Off-Flavor Reducing Agent Samples

Bran bread loaves were prepared with the formulations shown in Table 12-1 using the off-flavor reducing agent samples prepared in Examination 11, and were subjected to sensory evaluation.

The bran bread loaves were prepared according to "• Preparation Method of Bran Bread Loaves". In addition, the sensory evaluation was performed according to "• Sensory Evaluation Method 12". The results are shown in Table 12-2.

**Table 12-1: Formulations**

| | Comparative Example 12-1 | Example 12-1 | Example 12-2 | Example 12-3 | Example 12-4 | Example 12-5 |
|---|---|---|---|---|---|---|
| Mixed flour | 43.4 | 43.4 | 43.4 | 43.4 | 43.4 | 43.4 |
| Yeast | 1.3 | 1.3 | 1.3 | 1.3 | 1.3 | 1.3 |
| White superior soft sugar | 1.5 | 1.5 | 1.5 | 1.5 | 1.5 | 1.5 |
| Table salt | 0.4 | 0.4 | 0.4 | 0.4 | 0.4 | 0.4 |
| Whole egg | 4.3 | 4.3 | 4.3 | 4.3 | 4.3 | 4.3 |
| Oils and fats | 3.5 | - | - | - | - | - |
| Sample of Example 11-1 | - | 3.5 | - | - | - | - |
| Sample of Example 11-2 | - | - | 3.5 | - | - | - |
| Sample of Example 11-3 | - | - | - | 3.5 | - | - |
| Sample of Example 11-4 | - | - | - | - | 3.5 | - |
| Sample of Example 11-5 | - | - | - | - | - | 3.5 |
| Water | 45.6 | 45.6 | 45.6 | 45.6 | 45.6 | 45.6 |
| Total | 100.0 | 100.0 | 100.0 | 100.0 | 100.0 | 100.0 |
| Amount (mass%) of aqueous phase particles derived from off-flavor reducing agent sample | - | 0.0024 | 0.0048 | 0.0096 | 0.0024 | 0.0048 |

| | | | | | | |
|---|---|---|---|---|---|---|
| ((Unit for formulations is mass%) | | | | | | |

· "PAN de SMART Mix" manufactured by THE TORIGOE CO., LTD. in which wheat proteins or wheat bran was used instead of wheat flour was used as the mixed flour.
· Mixed oil of super palm olein manufactured by FUJI OIL CO., LTD., hardened oil, and transesterified oil was used as the oils and fats.

### • Preparation Method of Bran Bread Loaves

1. Raw materials were weighed and mixed with S30 Coat Mixer manufactured by AICOH (first level speed × 2 minutes -> second level speed × 5 minutes -> first level speed × 5 minutes -> second level speed × 13.5 minutes).
2. The mixture was fermented for 30 minutes at a temperature of 28°C and a humidity of 85%.
3. The mixture was divided into 80 g/piece.
4. Bench time: 20 minutes
5. Final proof: 38°C, humidity of 80%, 65 to 70 minutes
6. The resultant was baked in an oven for 12 minutes between a lower fire temperature of 210°C and an upper fire temperature of 230°C.

### • Sensory Evaluation Method 12

Four panelists ate the samples which were then scored in comparison with Comparative Example 12-1 according to the following criteria after consultation between the panelists.
3 Points: It was felt that an astringent taste and a grassy smell were greatly reduced compared to those of Comparative Example 12-1.
2 Points: It was felt that an astringent taste and a grassy smell were reduced compared to those of Comparative Example 12-1.
1 Point: It was felt that there was an equivalent or greater astringent taste and grassy smell than those of Comparative Example 12-1.

Two or more points were considered to be acceptable.

**Table 12-2: Results**

| | Comparative Example 12-1 | Example 12-1 | Example 12-2 | Example 12-3 | Example 12-4 | Example 12-5 |
|---|---|---|---|---|---|---|
| Sensory evaluation results | - | 2 | 3 | 3 | 3 | 3 |

### Consideration

· In recent years, bread with reduced use of wheat flour has been popular in the market, but in many cases, wheat proteins or wheat bran have been used instead of the wheat flour. However, these materials have a unique off-flavor which causes a problem, in some cases. In the present disclosure, it is possible to reduce off-flavors in such materials derived from cereals, and the present invention contributes to improvement of the flavor even in low-sugar bread.

### Examination 13: Evaluation of Off-Flavor Reducing Agent Samples

Bread loaves including various kinds of grain flour with the formulations shown in Table 13-1 were prepared using the off-flavor reducing agent sample (Example 11-3) prepared in Examination 11, and were subjected to sensory evaluation.

The bread loaves were prepared according to "• Preparation Method of Bread Loaves". In addition, the sensory evaluation was performed according to "• Sensory Evaluation Method 13". The results are shown in Table 13-2.

**Table 13-1: Formulations**

| | Comparative Example 13-1 | Comparative Example 13-2 | Comparative Example 13-3 | Example 13-1 | Example 13-2 | Example 13-3 |
|---|---|---|---|---|---|---|
| Wheat gluten | 15.6 | - | - | 15.6 | - | - |
| Oats bran | - | 15.6 | - | - | 15.6 | - |
| Soybean flour | - | - | 15.6 | - | - | 15.6 |
| Wheat flour | 36.5 | 36.5 | 36.5 | 36.5 | 36.5 | 36.5 |
| Oils and fats | 4.2 | 4.2 | 4.2 | 0.7 | 0.7 | 0.7 |
| Sample of Example 11-3 | - | - | - | 3.5 | 3.5 | 3.5 |
| White superior soft sugar | 2.1 | 2.1 | 2.1 | 2.1 | 2.1 | 2.1 |
| Table salt | 1 | 1 | 1 | 1 | 1 | 1 |
| Water | 39 | 39 | 39 | 39 | 39 | 39 |
| Dry yeast | 1.6 | 1.6 | 1.6 | 1.6 | 1.6 | 1.6 |
| Total | 100.0 | 100.0 | 100.0 | 100.0 | 100.0 | 100.0 |
| Amount (mass%) of aqueous phase particles derived from off-flavor reducing agent sample | - | - | - | 0.0096 | 0.0096 | 0.0096 |

| | | | | | | |
|---|---|---|---|---|---|---|
| (Unit for formulations is mass%) | | | | | | |

· "PRO Glu 65" manufactured by THE TORIGOE CO., LTD. was used as the wheat gluten.
· "Organic Oat Bran" manufactured by THE TORIGOE CO., LTD. was used as the oat bran.
· Powder obtained by heating soybean, deactivating enzymes, and powdering the soybean was used as the soybean flour.
· Mixed oil of super palm olein manufactured by FUJI OIL CO., LTD., hardened oil, and transesterified oil was used as the oils and fats.

### • Preparation Method of Bread Loaves

1. Oils and fats and the oil and fat composition of Example 11-3 were kneaded according to the formulations to form a paste.
2. Each raw material was placed in Home Bakery (manufactured by Panasonic Corporation).
3. Bread was baked according to a soft bread program (for about 5 hours of kneading → fermentation -> baking) using the above-described Home Bakery.
4. The remaining heat was removed, and the bread was packed in a bag.
5. On the next day or later, sensory evaluation was performed.

### • Sensory Evaluation Method 13

Three panelists ate the samples which were then scored while using Comparative Examples 13-1 to 13-3 as targets to be compared with Examples 13-1 to 13-3, respectively, according to the following criteria after consultation between the panelists.
3 Points: It was felt that an off-flavor of the example was clearly reduced compared to its corresponding comparative example.
2 Points: It was felt that an off-flavor of the example was reduced to some extent compared to its corresponding comparative example.
1 Point: It was felt that there was an equivalent or greater off-flavor than its corresponding comparative example.

Two or more points were considered to be acceptable.

**Table 13-2: Results**

| | Comparative Example 13-1 | Comparative Example 13-2 | Comparative Example 13-3 | Example 13-1 | Example 13-2 | Example 13-3 |
|---|---|---|---|---|---|---|
| Sensory evaluation results | - | - | - | 3 | 3 | 3 |

### Consideration

Although the examination was performed on the samples with only the hesperidin materials, it was observed that off-flavors in all of the samples was improved compared to the controls. The off-flavor was not limited to an astringent taste, and it was observed that the effect of reducing an acrid taste in wheat gluten, spicy feeling of oat bran, and a grassy smell in soybean flour was prominent.

### Examination 14: Preparation of OffFlavor Reducing Agent Samples

Off-flavor reducing agent samples were prepared according to the formulations of Table 14-1. The preparation method was performed according to "• Preparation Method 6 of OffFlavor Reducing Agent Samples".

**Table 14-1: Formulations**

| | | Example 14-1 | Example 14-2 | Example 14-3 |
|---|---|---|---|---|
| Oily phase | Oils and fats | 99.60 | 99.60 | 99.60 |
| | Oil-soluble emulsifier | 0.1 | 0.1 | 0.1 |
| Aqueous phase | Water | 0.24 | 0.24 | 0.24 |
| | Hesperidin material | 0.06 | - | - |
| | Anthocyanin material | - | 0.06 | - |
| | Rutin material | - | - | 0.06 |
| Total | | 100.00 | 100.00 | 100.00 |
| Proportion (mass%) of aqueous phase | | 0.30 | 0.30 | 0.30 |
| Amount (mass%) of polyphenol material in aqueous phase | | 20.0% | 20.0% | 20.0% |

| | | | | |
|---|---|---|---|---|
| (Unit for formulations is mass%) | | | | |

· Super palm olein "Palm Ace 10" manufactured by FUJI OIL CO., LTD. was used as the oils and fats.
· A polyglycerol condensed ricinoleic acid ester "CRS-75" manufactured by Sakamoto Yakuhin Kogyo Co., Ltd. was used as the oil-soluble emulsifier.
· "αG Hesperidin" manufactured by Toyo Sugar Refining Co., Ltd. was used as the hesperidin material.
· "αG Rutin PS" manufactured by Toyo Sugar Refining Co., Ltd. was used as the rutin material.
· "Powdered Grape Extract HA" manufactured by San-Ei Gen F.F.I., Inc. was used as the anthocyanin material.

### Examination 15: Evaluation of Off-Flavor Reducing Agent Samples

Bran bread loaves were prepared with the formulations shown in Table 15-1 using the off-flavor reducing agent samples prepared in Examination 14, and were subjected to sensory evaluation.

The bran bread loaves were prepared according to "• Preparation Method 15 of Bran Bread Loaves". In addition, the sensory evaluation was performed according to "• Sensory Evaluation Method 15". The results are shown in Table 15-2.

**Table 15-1: Formulations**

| | Comparative Example 15-1 | Comparative Example 15-2 | Comparative Example 15-3 | Comparative Example 15-4 | Example 15-1 | Example 15-2 | Example 15-3 | Example 15-4 |
|---|---|---|---|---|---|---|---|---|
| Un-deactivated soybean flour | 15.6 | - | - | - | 15.6 | - | - | - |
| Deactivated soybean flour | - | 15.6 | - | - | - | 15.6 | - | - |
| Wheat gluten | - | - | 15.6 | - | - | - | 15.6 | - |
| Bran flour | - | - | - | 15.6 | - | - | - | 15.6 |
| Wheat flour | 36.5 | 36.5 | 36.5 | 36.5 | 36.5 | 36.5 | 36.5 | 36.5 |
| Sample of Example 14-1 | - | - | - | - | 4.2 | 4.2 | 4.2 | 4.2 |
| Oils and fats | 4.2 | 4.2 | 4.2 | 4.2 | - | - | - | - |
| White superior soft sugar | 2.1 | 2.1 | 2.1 | 2.1 | 2.1 | 2.1 | 2.1 | 2.1 |
| Table salt | 1.0 | 1.0 | 1.0 | 1.0 | 1.0 | 1.0 | 1.0 | 1.0 |
| Water | 39.0 | 39.0 | 39.0 | 39.0 | 39.0 | 39.0 | 39.0 | 39.0 |
| Dry yeast | 1.6 | 1.6 | 1.6 | 1.6 | 1.6 | 1.6 | 1.6 | 1.6 |
| Total | 100.0 | 100.0 | 100.0 | 100.0 | 100.0 | 100.0 | 100.0 | 100.0 |
| Amount (mass%) of aqueous phase particles derived from off-flavor reducing agent sample | - | - | - | - | 0.0126 | 0.0126 | 0.0126 | 0.0126 |

| | Example 15-5 | Example 15-6 | Example 15-7 | Example 15-8 | Example 15-9 | Example 15-10 | Example 15-11 | Example 15-12 |
|---|---|---|---|---|---|---|---|---|
| Un-deactivated soybean flour | 15.6 | - | - | - | 15.6 | - | - | - |
| Deactivated soybean flour | - | 15.6 | - | - | - | 15.6 | - | - |
| Wheat gluten | - | - | 15.6 | - | - | - | 15.6 | - |
| Bran flour | - | - | - | 15.6 | - | - | - | 15.6 |
| Wheat flour | 36.5 | 36.5 | 36.5 | 36.5 | 36.5 | 36.5 | 36.5 | 36.5 |
| Sample of Example 14-2 | 4.2 | 4.2 | 4.2 | 4.2 | - | - | - | - |
| Sample of Example 14-3 | - | - | - | - | 4.2 | 4.2 | 4.2 | 4.2 |
| Oils and fats | - | - | - | - | - | - | - | - |
| White superior soft sugar | 2.1 | 2.1 | 2.1 | 2.1 | 2.1 | 2.1 | 2.1 | 2.1 |
| Table salt | 1.0 | 1.0 | 1.0 | 1.0 | 1.0 | 1.0 | 1.0 | 1.0 |
| Water | 39.0 | 39.0 | 39.0 | 39.0 | 39.0 | 39.0 | 39.0 | 39.0 |
| Dry yeast | 1.6 | 1.6 | 1.6 | 1.6 | 1.6 | 1.6 | 1.6 | 1.6 |
| Total | 100.0 | 100.0 | 100.0 | 100.0 | 100.0 | 100.0 | 100.0 | 100.0 |
| Amount (mass%) of aqueous phase particles derived from off-flavor reducing agent sample | 0.0126 | 0.0126 | 0.0126 | 0.0126 | 0.0126 | 0.0126 | 0.0126 | 0.0126 |

| | | | | | | | | |
|---|---|---|---|---|---|---|---|---|
| (Unit for formulations is mass%) | | | | | | | | |

· "Soybean flour" manufactured by Pelican Co., Ltd was used as the un-deactivated soybean flour.
· "Whole Fat Deodorized soybean flour" manufactured by Pelican Co., Ltd was used as the deactivated soybean flour.
· "PRO Glu 65" manufactured by THE TORIGOE CO., LTD. was used as the wheat gluten.
· "Organic Oat Bran" manufactured by Alishan Organic Center was used as the bran flour.
· Super palm olein "Palm Ace 10" manufactured by FUJI OIL CO., LTD. was used as the oils and fats.

### • Preparation Method 15 of Bran Bread Loaves

1. Raw materials were placed in Home Bakery (manufactured by Panasonic Corporation).
2. Bran bread was prepared according to "Soft Bread Program (for about 5 hours of kneading -> fermentation -> baking)".
3. The remaining heat was removed, and the bread was packed in a bag.
4. On the next day or later, sensory evaluation was performed.

### • Sensory Evaluation Method 15

Three panelists ate the samples which were then scored while using Comparative Example 15-1 as a target to be compared with Examples 15-1, 15-5, and 15-9, Comparative Example 15-2 as a target to be compared with Examples 15-2, 15-6, and 15-10, Comparative Example 15-3 as a target to be compared with Examples 15-3, 15-7, and 15-11, and Comparative Example 15-4 as a target to be compared with Examples 15-4, 15-8, and 15-12 according to the following criteria after consultation between the panelists.
3 Points: It was felt that an off-flavor was clearly reduced compared to its comparison target.
2 Points: It was felt that an off-flavor was reduced to some extent compared to its comparison target.
1 Point: It was felt that there was an equivalent or greater off-flavor than its comparison target.

Two or more points were considered to be acceptable.

**Table 15-2: Results**

| | Example 15-1 | Example 15-2 | Example 15-3 | Example 15-4 | Example 15-5 | Example 15-6 |
|---|---|---|---|---|---|---|
| Sensory evaluation results | 3 | 3 | 3 | 2 | 3 | 3 |

| | Example 15-7 | Example 15-8 | Example 15-9 | Example 15-10 | Example 15-11 | Example 15-12 |
|---|---|---|---|---|---|---|
| Sensory evaluation results | 2 | 2 | 3 | 3 | 2 | 2 |

| | | | | | | |
|---|---|---|---|---|---|---|
| Consideration | | | | | | |

It has become clear that the presence of any of the hesperidin material, the anthocyanin material, or the rutin material in a state where an aqueous phase in which a predetermined amount of each of the materials is dissolved is dispersed in an oily phase reduces off-flavors derived from cereals as shown in Table 15-2.

### Examination 16: Preparation of Off-Flavor Reducing Agent Samples

Off-flavor reducing agent samples were prepared according to the formulations of Table 16-1. The preparation method was performed according to "• Preparation Method 6 of Off-Flavor Reducing Agent Samples".

**Table 16-1: Formulations**

| | | Comparative Example 16-1 | Comparative Example 16-2 | Example 16-1 | Example 16-2 |
|---|---|---|---|---|---|
| Oily phase | Vegetable oils and fats | 100 | 99.83 | 99.83 | 99.83 |
| | Oil-soluble emulsifier | - | 0.05 | 0.05 | 0.05 |
| Aqueous phase | Water | - | 0.1 | 0.1 | 0.1 |
| | Ascorbic acid | - | 0.015 | - | - |
| | Anthocyanin material | - | - | 0.015 | - |
| | Hesperidin material | - | - | - | 0.015 |
| Total | | 100.00 | 100.00 | 100.00 | 100.00 |
| Proportion (mass%) of aqueous phase | | 0 | 0.115 | 0.115 | 0.115 |
| Amount (mass%) of polyphenol material in aqueous phase | | - | - | 13.0% | 13.0% |

| | | | | | |
|---|---|---|---|---|---|
| (Unit or formulations is mass%) | | | | | |

· Super palm olein "Palm Ace 10" manufactured by FUJI OIL CO., LTD. was used as the oils and fats.
· A polyglycerol condensed ricinoleic acid ester "CRS-75" manufactured by Sakamoto Yakuhin Kogyo Co., Ltd. was used as the oil-soluble emulsifier.
· "αG Hesperidin" manufactured by Toyo Sugar Refining Co., Ltd. was used as the hesperidin material.
· "Powdered Grape Extract HA" manufactured by San-Ei Gen F.F.I., Inc. was used as the anthocyanin material.

### Examination 17: Evaluation of Off-Flavor Reducing Agent Samples

Oils and fats were prepared with the formulations shown in Table 17-1 using the off-flavor reducing agent samples prepared in Examination 16, and were subjected to sensory evaluation.

The oils and fats at each deodorization temperature were prepared according to "• Preparation Method of Oils and Fats".

The sensory evaluation was performed according to "• Sensory Evaluation Method 17". The results are shown in Table 17-2.

**Table 17-1: Formulations**

| | | Comparative Example 17-1 | Comparative Example 17-2 | Comparative Example 17-3 | Comparative Example 17-4 | Comparative Example 17-5 | Comparative Example 17-6 | Comparative Example 17-7 | Comparative Example 17-8 |
|---|---|---|---|---|---|---|---|---|---|
| Deodorization temperature | 190°C | 90 | - | - | - | 90 | - | - | - |
| | 210°C | - | 90 | - | - | - | 90 | - | - |
| | 230°C | - | - | 90 | - | - | - | 90 | - |
| | 250°C | - | - | - | 90 | - | - | - | 90 |
| Sample of Comparative Example 16-1 | | 10 | 10 | 10 | 10 | - | - | - | - |
| Sample of Comparative Example 16-2 | | - | - | - | - | 10 | 10 | 10 | 10 |
| Total | | 100 | 100 | 100 | 100 | 100 | 100 | 100 | 100 |
| Amount (mass%) of aqueous phase particles derived from off-flavor reducing agent sample | | 0.000 | 0.000 | 0.000 | 0.000 | 0.0115 | 0.0115 | 0.0115 | 0.0115 |

| | | | | | | | | | |
|---|---|---|---|---|---|---|---|---|---|
| (Unit for formulations is mass%) | | | | | | | | | |

| | | Example 17-1 | Example 17-2 | Example 17-3 | Example 17-4 | Example 17-5 | Example 17-6 | Example 17-7 | Example 17-8 |
|---|---|---|---|---|---|---|---|---|---|
| Deodorization temperature | 190°C | 90 | - | - | - | 90 | - | - | - |
| | 210°C | - | 90 | - | - | - | 90 | - | - |
| | 230°C | - | - | 90 | - | - | - | 90 | - |
| | 250°C | - | - | - | 90 | - | - | - | 90 |
| Sample of Comparative Example 16-1 | | 10 | 10 | 10 | 10 | - | - | - | - |
| Sample of Comparative Example 16-2 | | - | - | - | - | 10 | 10 | 10 | 10 |
| Total | | 100 | 100 | 100 | 100 | 100 | 100 | 100 | 100 |
| Amount (mass%) of aqueous phase particles derived from off-flavor reducing agent sample | | 0.0115 | 0.0115 | 0.0115 | 0.0115 | 0.0115 | 0.0115 | 0.0115 | 0.0115 |

| | | | | | | | | | |
|---|---|---|---|---|---|---|---|---|---|
| (Unit for formulations is mass%) | | | | | | | | | |

· The deodorization temperatures described as 190°C, 210°C, 230°C, and 250°C respectively indicate temperatures at which oils and fats are deodorized.

### • Preparation Method of Oils and Fats

Non-deodorized products of super palm olein ("Palm Ace" manufactured by FUJI OIL CO., LTD.) were subjected to deodorization treatment at temperatures of 190°C, 210°C, 230°C, and 250°C. The method followed the usual way.

### • Sensory Evaluation Method 17

The prepared samples were stored at 60°C for 7 days and were then brought to room temperature. Four panelists directly ate the samples for evaluation.

The samples were scored while using Comparative Example 17-1 as a target to be compared with Comparative Example 17-5 and Examples 17-1 and 17-5, Comparative Example 17-2 as a target to be compared with Comparative Example 17-6 and Examples 17-2 and 17-6, Comparative Example 17-3 as a target to be compared with Comparative Example 17-7 and Examples 17-3 and 17-7, and Comparative Example 17-4 as a target to be compared with Comparative Example 17-8 and Examples 17-4 and 17-8 according to the following criteria after consultation between the panelists.
3 Points: It was felt that an off-flavor was clearly reduced compared to its comparison target.
2 Points: It was felt that an off-flavor was reduced to some extent compared to its comparison target.
1 Point: It was felt that there was an equivalent or greater off-flavor than its comparison target.

Two or more points were considered to be acceptable.

**Table 17-2: Results**

| | Comparative Example 17-1 | Comparative Example 17-2 | Comparative Example 17-3 | Comparative Example 17-4 | Comparative Example 17-5 | Comparative Example 17-6 | Comparative Example 17-7 | Comparative Example 17-8 |
|---|---|---|---|---|---|---|---|---|
| Sensory evaluation results | - | - | - | - | 1 | 1 | 1 | 1 |

| | Example 17-1 | Example 17-2 | Example 17-3 | Example 17-4 | Example 17-5 | Example 17-6 | Example 17-7 | Example 17-8 |
|---|---|---|---|---|---|---|---|---|
| Sensory evaluation results | 2 | 2 | 2 | 2 | 3 | 3 | 3 | 3 |

### Consideration

It has become clear that an off-flavor found in a case where the deodorization temperature is low can also be reduced by the method according to the present disclosure.

Although the amount of trans fatty acids generated can be suppressed by lowering the deodorization temperature of oils and fats, the flavor of the oils and fats becomes bad, in some cases. According to the present disclosure, it is possible to reduce the off-flavor of oils and fats in the case where the deodorization temperature is low. Therefore, it is possible to obtain oils and fats with a small amount of trans fatty acids and a favorable flavor.

### Examination 18: Preparation of Off-Flavor Reducing Agent Samples

Off-flavor reducing agent samples were prepared according to the formulations of Table 18-1. The preparation method was performed according to "• Preparation Method 18 of Off-Flavor Reducing Agent Samples".

**Table 18-1: Formulations**

| | | Comparative Example 18-1 | Example 18-1* | Example 18-2 | Example 18-3 | Example 18-4 |
|---|---|---|---|---|---|---|
| Oily phase | Vegetable oils and fats | 100 | 99.9505 | 99.9505 | 99.9505 | 99.9505 |
| | Oil-soluble emulsifier | - | 0.015 | 0.015 | 0.015 | 0.015 |
| Aqueous phase | Water | - | 0.03 | 0.03 | 0.03 | 0.03 |
| | Isoflavone material | - | 0.0045 | - | - | - |
| | Hesperidin material | - | - | 0.0045 | - | - |
| | Anthocyanin material | - | - | - | 0.0045 | - |
| | Rutin material | - | - | - | - | 0.0045 |
| Total | | 100.00 | 100.00 | 100.00 | 100.00 | 100.00 |
| Amount (mass%) of polyphenol material in aqueous phase | | - | 13.04 | 13.04 | 13.04 | 13.04 |
| Proportion (mass%) of aqueous phase | | | 0.0345 | 0.0345 | 0.0345 | 0.0345 |

| | | | | | | |
|---|---|---|---|---|---|---|
| * Not according to the present invention (Unit for formulations is mass%) | | | | | | |

· "Rapeseed Oil" manufactured by FUJI OIL CO., LTD. was used as the vegetable oils and fats.
· A polyglycerol condensed ricinoleic acid ester "CRS-75" manufactured by Sakamoto Yakuhin Kogyo Co., Ltd. was used as the oil-soluble emulsifier.
· An isoflavone material "Soyaflavone HG" manufactured by FUJI OIL CO., LTD. was used as the isoflavone material.
· A hesperidin material "αG Hesperidin" manufactured by Toyo Sugar Refining Co., Ltd. was used as the hesperidin material.
· "αG Rutin PS" manufactured by Toyo Sugar Refining Co., Ltd. was used as the rutin material.
· "Powdered Grape Extract HA" manufactured by San-Ei Gen F.F.I., Inc. was used as the anthocyanin material.

### • Preparation Method 18 of Off-Flavor Reducing Agent Samples

1. Raw materials classified into the oily phase in the formulations were melted and mixed with each other to prepare an oily phase.
2. Raw materials classified into the aqueous phase in the formulations were dissolved in water to prepare an aqueous phase.
3. The aqueous phase was mixed with the oily phase, and the mixture was emulsified to form a water-in-oil type emulsion.

### Examination 19: Evaluation of Off-Flavor Reducing Agent Samples

The off-flavor reducing agent samples prepared in Examination 18 were added to commercially available green juice beverages as shown in Table 19-1, and the beverages were subjected to sensory evaluation. The addition of the samples to the green juice beverages were performed according to "• Addition Method 19 to Green Juice Beverages".

In addition, the sensory evaluation was performed according to "• Sensory Evaluation Method 19". The results are shown in Table 19-2.

**Table 19-1: Formulations of Green Juice Beverages**

| | Comparative Example 19-1 | Example 19-1* | Example 19-2 | Example 19-3 | Example 19-4 |
|---|---|---|---|---|---|
| Commercially available green juice beverage | 97.9 | 97.9 | 97.9 | 97.9 | 97.9 |
| Water-soluble emulsifier | 0.1 | 0.1 | 0.1 | 0.1 | 0.1 |
| Sample of Comparative Example 18-1 | 2.0 | - | - | - | - |
| Sample of Example 18-1* | - | 2.0 | - | - | - |
| Sample of Example 18-2 | - | - | 2.0 | - | - |
| Sample of Example 18-3 | - | - | - | 2.0 | - |
| Sample of Example 18-4 | - | - | - | - | 2.0 |
| Total | 100.0 | 100.0 | 100.0 | 100.0 | 100.0 |
| Amount (mass%: calculation value) of aqueous phase particles in formulations | - | 0.0007 | 0.0007 | 0.0007 | 0.0007 |

| | | | | | |
|---|---|---|---|---|---|
| *Not according to the invention (Unit for formulations is mass%) | | | | | |

· "Green Juice with Plenty of Dietary Fiber" manufactured by KAGOME CO., Ltd. was used as the commercially available green juice beverage. This product is labeled as "Vegetables (spinach, carrot, kale, and Brussels sprouts (Petit vert)), fruits (apples and lemons), dietary fiber/citric acid, shellfish calcium, vitamin C, safflower yellow pigments, gardenia blue pigments, flavorings, and ferric pyrophosphate" in the description of ingredients.
· A sugar ester "Ryoto Sugar Ester S1670" (HLB16) manufactured by MITSUBISHI-CHEMICAL FOODS CORPORATION was used as the water-soluble emulsifier.

### • Addition Method 19 to Green Juice Beverages

1. Green juice was heated to 60°C.
2. A water-soluble emulsifier was dissolved in the green juice.
3. The samples were mixed with the green juice and emulsified.

### • Sensory Evaluation Method 19

Prepared samples were subjected to sensory evaluation by three panelists and scored according to the following criteria after consultation.
3 Points: It was felt that a grassy smell or an acrid taste was greatly reduced compared to that of Comparative Example 19-1.
2 Points: It was felt that a grassy smell or an acrid taste was reduced compared to that of Comparative Example 19-1.
1 Point: It was felt that there was an equivalent or greater grassy smell or an acrid taste than that of Comparative Example 19-1.

Two or more points were considered to be acceptable.

**Table 19-2: Results**

| | Comparative Example 19-1 | Example 19-1* | Example 19-2 | Example 19-3 | Example 19-4 |
|---|---|---|---|---|---|
| Evaluation results | - | 2 | 3 | 3 | 2 |

| | | | | | |
|---|---|---|---|---|---|
| *Not according to the present invention | | | | | |

### Consideration

A grassy smell or an acrid taste in the green juice beverages was reduced as shown in Table 19-2 by incorporating aqueous phase particles containing 1 to 60 mass% of a polyphenol material in a state in which the aqueous phase particles are dispersed in an oily phase.

### Examination 20: Evaluation of Off-Flavor Reducing Agent Samples

Dressings with the formulations shown in Table 20-1 were prepared using some off-flavor reducing agent samples prepared in Examination 18. The preparation method of the dressings was performed according to "• Preparation Method 20 of Dressings"

The obtained dressings were actually added to vegetables and were then subjected to sensory evaluation according to "• Sensory Evaluation Method 20". The results are shown in Table 20-2

**Table 20-1: Formulations of Dressings**

| | Comparative Example 20-1 | Example 20-1 | Example 20-2 |
|---|---|---|---|
| Vinegar | 31.0 | 31.0 | 31.0 |
| Sugar | 3.4 | 3.4 | 3.4 |
| Table salt | 3.4 | 3.4 | 3.4 |
| Sample of Comparative Example 18-1 | 62.2 | - | - |
| Sample of Example 18-2 | - | 62.2 | - |
| Sample of Example 18-3 | - | - | 62.2 |
| Total | 100.0 | 100.0 | 100.0 |
| Amount of aqueous phase particles in formulations | - | 1.2440 | 1.2440 |

| | | | |
|---|---|---|---|
| (Unit for formulations is mass%) | | | |

· "Grain Flavored Distilled Vinegar" manufactured by Mizkan Holdings Co., Ltd. was used as the vinegar.

### • Preparation Method 20 of Dressings

1. Vinegar, sugar, and table salt were placed in a sealed container and stirred to be completely dissolved.
2. Each sample was added thereto, and the mixture was further stirred and emulsified.

### • Sensory Evaluation Method 20

1. Lettuce, kale, spinach, celery, and onion were chopped into 3 to 4 mm squares.
2. 20 mass% of each of the various dressing samples was added thereto and mixed uniformly.
3. The tasting was performed by four panelists, and the samples were scored according to the following criteria after consultation.
3 Points: It was felt that a grassy smell or an acrid taste was greatly reduced compared to that of Comparative Example 20-1.
2 Points: It was felt that a grassy smell or an acrid taste was reduced compared to that of Comparative Example 20-1.
1 Point: It was felt that there was an equivalent or greater grassy smell or an acrid taste than that of Comparative Example 20-1.

**Table 20-2: Results**

| | Comparative Example 20-1 | Example 20-1 | Example 20-2 |
|---|---|---|---|
| Evaluation results | - | 3 | 3 |

### Consideration

A grassy smell or an acrid taste in the various vegetables was reduced as shown in Table 20-2 by incorporating aqueous phase particles containing 1 to 60 mass% of a polyphenol material in a state in which the aqueous phase particles are dispersed in an oily phase.

### Examination 21: Preparation of Off-Flavor Reducing Agent Samples

Off-flavor reducing agent samples were prepared according to the formulations of Table 21-1. The preparation method was performed according to "• Preparation Method 21 of Off-Flavor Reducing Agent Samples".

**Table 21-1: Formulations**

| | | Comparative Example 21-1 | Example 21-1 | Comparative Example 21-2 | Example 21-2* | Example 21-3 | Example 21-4 | Example 21-5 | Comparative Example 21-3 |
|---|---|---|---|---|---|---|---|---|---|
| Oily phase | Vegetable oils and fats | 100 | 99.9505 | 99.9505 | 99.9505 | 99.9505 | 99.9505 | 99.9505 | 99.9505 |
| | Oil-soluble emulsifier | - | 0.015 | 0.015 | 0.015 | 0.015 | 0.015 | 0.015 | 0.015 |
| Aqueous phase | Water | - | 0.03 | 0.03 | 0.03 | 0.03 | 0.03 | 0.03 | 0.03 |
| | Hesperidin material | - | 0.0045 | - | - | - | - | - | 0.0045 |
| | Ascorbic acid | - | - | 0.0045 | - | - | - | - | - |
| | Isoflavone material | - | - | - | 0.0045 | - | - | - | - |
| | Anthocyanin material | - | - | - | - | 0.0045 | - | - | - |
| | Rutin material | - | - | - | - | - | 0.0045 | - | - |
| | Coffee polyphenol material | - | - | - | - | - | - | 0.0045 | - |
| Total | | 100 | 100.00 | 100.00 | 100.00 | 100.00 | 100.00 | 100.00 | 100.00 |
| Amount mass%) of polyphenol material in aqueous phase | | - | 13.0 | | 13.0 | 13.0 | 13.0 | 13.0 | 13.0 |
| Proportion (mass%) of aqueous phase | | - | 0.03 | 0.03 | 0.03 | 0.03 | 0.03 | 0.03 | 0.03 |

| | | | | | | | | | |
|---|---|---|---|---|---|---|---|---|---|
| * Not according to the present invention (Unit for formulations is mass%) | | | | | | | | | |

· "Purified Coconut Oil" manufactured by FUJI OIL CO., LTD. was used as the vegetable oils and fats.
· A polyglycerol condensed ricinoleic acid ester "POEM PR-100" (HLB: 1) manufactured by RIKEN VITAMIN CO., LTD. was used as the oil-soluble emulsifier.
· "αG Hesperidin" manufactured by Toyo Sugar Refining Co., Ltd. was used as the hesperidin material.
. "Soyaflavone HG" manufactured by FUJI OIL CO., LTD. was used as the isoflavone material.
· "Powdered Grape Extract HA" manufactured by San-Ei Gen F.F.I., Inc. was used as the anthocyanin material.
· "αG Rutin PS" manufactured by Toyo Sugar Refining Co., Ltd. was used as the rutin material.
· "Raw Coffee Bean Extract-P" manufactured by Oryza Oil & Fat Chemical Co., Ltd. was used as the coffee polyphenol material.

### • Preparation Method 21 of Off-Flavor Reducing Agent Samples

1. Raw materials classified into the oily phase in the formulations were melted and mixed with each other to prepare an oily phase.
2. Raw materials classified into the aqueous phase in the formulations were dissolved in water to prepare an aqueous phase.
3. The aqueous phase was mixed with the oily phase, and the mixture was emulsified to form a water-in-oil type emulsion.

For Comparative Example 21-3, an aqueous phase and an oily phase were only slightly mixed with each other, and an emulsification operation was not performed. In this case, the aqueous phase was not dispersed.

### Examination 22: Evaluation Method of Off-Flavor Reducing Agent Samples

The off-flavor reducing agent samples prepared in Examination 21 were added to coffee beverages and black tea beverages to verify the effect.

The formulations of the beverages are shown in Table 22-1. In addition, the beverages were prepared according to "• Preparation Method 22 of Beverage Samples".

The prepared beverage samples were evaluated according to "• Evaluation Method 22 of Beverage Samples", and the results are shown in Table 22-2.

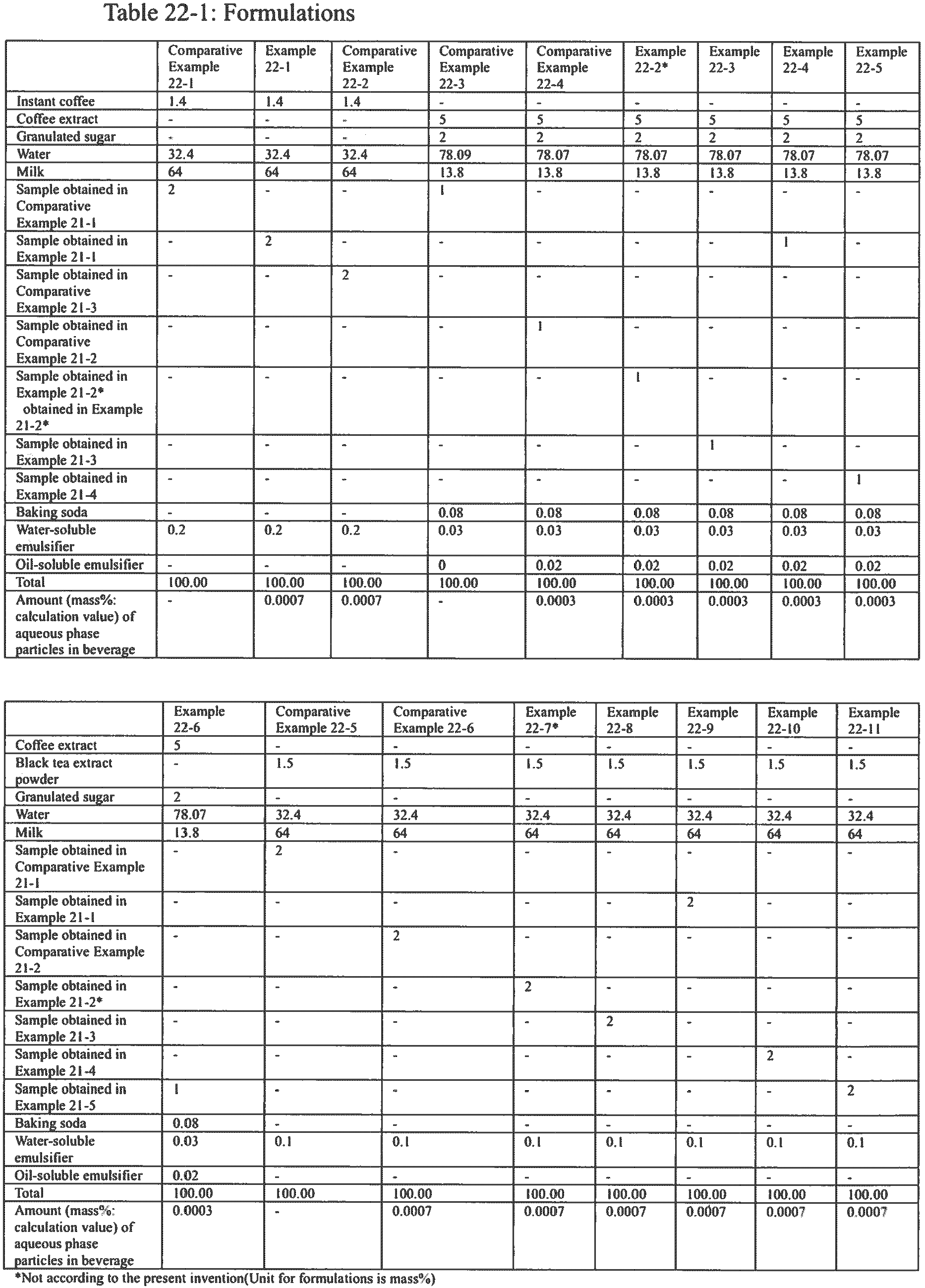

· "Nescafe Excella" manufactured by Nestle Japan Ltd. was used as the instant coffee. · "Coffee Extract" manufactured by Takasago International Corporation was used as the coffee extract.
   · "Assam Extract Powder" manufactured by Sato Foods Industries Co., Ltd. was used as the black tea extract powder.
   · A sugar ester "Ester S1670" manufactured by MITSUBISHI-CHEMICAL FOODS CORPORATION was used as the water-soluble emulsifier.
   · A sugar ester "Ester S570" manufactured by MITSUBISHI-CHEMICAL FOODS CORPORATION was used as the oil-soluble emulsifier.

• Preparation Method 22 of Beverage Samples
· Coffee
   1. Milk, granulated sugar, baking soda, an emulsifier, a coffee extract, and instant coffee were added to warm water at a temperature of higher than or equal to 80°C according to the formulations, and the mixture was stirred with a homomixer at 5,000 rpm until the mixture became uniform.
   2. Vegetable oils and fats were added thereto, and the mixture was stirred with the homomixer at 8,000 rpm for 10 minutes.
   3. The container was filled up with water.
   4. The mixture was homogenized (high-pressure homogenization at 150 MPa).
   5. A 200 ml can was filled with 190 ml of the mixture.
   6. Autoclave sterilization (121°C × 20 minutes) was performed.
   7. Remaining heat was removed using ice water. The remainder was stored at room temperature for 1 week, and was then refrigerated.
   8. The refrigerated remainder was subjected to sensory evaluation more than 1 day after the refrigeration.
· Black Tea
   1. Milk and a black tea extract were added to warm water at a temperature of higher than or equal to 80°C according to the formulations, and the mixture was stirred with a homomixer at 5,000 rpm until the mixture became uniform.
   2. Vegetable oils and fats were added thereto, and the mixture was stirred with the homomixer at 8,000 rpm for 10 minutes.
   3. The container was filled up with water.
   4. The mixture was homogenized (high-pressure homogenization at 150 MPa).
   5. A 200 ml can was filled with 190 ml of the mixture.
   6. Autoclave sterilization (121°C × 20 minutes) was performed.
   7. Remaining heat was removed using ice water. The remainder was stored at room temperature for 1 week, and was then refrigerated.
   8. The refrigerated remainder was subjected to sensory evaluation more than 1 day after the refrigeration.

### • Evaluation Method 22 of Beverage Samples

The samples were scored while using Comparative Example 22-1 as a control of Example 22-1 and Comparative Example 22-2, Comparative Example 22-3 as a control of Comparative Example 22-4 and Examples 22-2 to 22-6, and Comparative Example 22-5 as a control of Comparative Example 22-6 and Examples 22-7 to 22-11 according to the following criteria. The scoring was performed by five panelists after consultation.
5 Points: An off-flavor is reduced compared to the control, and a favorable flavor outstands.
4 Points: An off-flavor is reduced compared to the control, and a favorable flavor tends to be emphasized.
3 Points: It is judged that an off-flavor is clearly reduced compared to the control.
2 Points: It is judged that an off-flavor is slightly reduced compared to the control.
1 Point: It is judged that the degree of an off-flavor is equivalent to the control.

Two or more points were judged to be acceptable.

**Table 22-2: Results**

| | Comparative Example 22-1 | Example 22-1 | Comparative Example 22-2 | Comparative Example 22-3 | Comparative Example 22-4 | Example 22-2* | Example 22-3 | Example 22-4 | Example 22-5 |
|---|---|---|---|---|---|---|---|---|---|
| Evaluation results | 1 | 5 | 1 | 1 | 1 | 2 | 5 | 5 | 3 |

| | Example 22-6 | Comparative Example 22-5 | Comparative Example 22-6 | Example 22-7* | Example 22-8 | Example 22-9 | Example 22-10 | Example 22-11 |
|---|---|---|---|---|---|---|---|---|
| Evaluation results | 2 | 1 | 1 | 2 | 5 | 5 | 3 | 2 |

### Consideration

As shown in the results, it was confirmed that the presence of aqueous phase particles containing 1 to 60 mass% of a polyphenol material reduces off-flavors in beverages.

In addition, a favorable effect of making flavors in beverages outstand was also confirmed.

## Claims

1. A food, of which an off-flavor is reduced, comprising:
0.1 to 60 mass % of an off-flavor reducing agent, the off-flavor reducing agent comprising aqueous phase particles which contain 1 to 60 mass% of a polyphenol material and are dispersed in an oily phase,
wherein the polyphenol material is one or more selected from a hesperidin material, a coffee polyphenol material, a rutin material, and an anthocyanin material, and wherein
the food is one or more selected from a high-cacao chocolate having a cacao content greater than or equal to 65 mass%, a vegetable, a beverage,
a bean-derived material, a wheat-derived material, a potato-derived material, a rice-derived material, a corn-derived material, and vegetable oils and fats.

2. The food according to claim 1,
wherein a proportion of an aqueous phase in the off-flavor reducing agent is 0.001 to 20 mass%.

3. The food according to claim 1,
wherein the vegetable is one or more selected from bell peppers, carrots, celery, spinach, kale, cabbage, onions, eggplants, cucumbers, bitter gourd, zucchini, lettuce, leeks, garland chrysanthemum, cauliflower, broccoli, spring onions, and barley leaves.

4. The food according to claim 1,
wherein the beverage is a coffee beverage or a black tea beverage.

## Patentansprüche

1. Lebensmittel, bei dem ein Fehlgeschmack reduziert ist, umfassend:
zu 0,1 bis 60 Masse-% ein Fehlgeschmack reduzierendes Mittel, wobei das Fehlgeschmack reduzierende Mittel Teilchen einer wässrigen Phase umfasst, die zu 1 bis 60 Masse-% ein Polyphenolmaterial enthalten und in einer öligen Phase dispergiert sind,
wobei das Polyphenolmaterial eines oder mehrere ist, ausgewählt aus einem Hesperidinmaterial, einem Kaffeepolyphenolmaterial, einem Rutinmaterial und einem Anthocyaninmaterial, und wobei
das Lebensmittel eines oder mehrere ist, ausgewählt aus einer Schokolade mit hohem Kakaogehalt, wobei ein Kakaogehalt größer als oder gleich 65 Masse-% ist, einem Gemüse, einem Getränk,
einem aus Bohnen gewonnenen Stoff, einem aus Weizen gewonnenen Stoff, einem aus Kartoffeln gewonnenen Stoff, einem aus Reis gewonnenen Stoff, einem aus Mais gewonnenen Stoff und pflanzlichen Ölen und Fetten.

2. Lebensmittel nach Anspruch 1,
wobei ein Anteil einer wässrigen Phase in dem Fehlgeschmack reduzierenden Mittel 0,001 bis 20 Masse-% beträgt.

3. Lebensmittel nach Anspruch 1,
wobei das Gemüse eines oder mehrere ist, ausgewählt aus Paprika, Karotten, Sellerie, Spinat, Grünkohl, Kohl, Zwiebeln, Auberginen, Gurken, Bitterkürbis, Zucchini, Kopfsalat, Lauch, Salatchrysanthemen, Blumenkohl, Brokkoli, Frühlingszwiebeln und Gerstenblättern.

4. Lebensmittel nach Anspruch 1,
wobei das Getränk ein Kaffeegetränk oder ein Schwarzteegetränk ist.

## Revendications

1. Aliment, dont l'arrière-goût est réduit, comprenant:
de 0,1 à 60 % en masse d'un agent réducteur d'arrière-goût, l'agent réducteur d'arrière-goût comprenant des particules en phase aqueuse qui contiennent de 1 à 60 % en masse d'une matière polyphénolique et sont dispersées dans une phase huileuse,
dans lequel le matériau polyphénolique est un ou plusieurs matériaux choisis parmi un matériau d'hespéridine, un matériau de polyphénol de café, un matériau de rutine et un matériau d'anthocyanine, et dans lequel
l'aliment est un ou plusieurs choisis parmi un chocolat à haute teneur en cacao ayant une teneur en cacao supérieure ou égale à 65 % en masse, un légume, une boisson,
une matière dérivée de haricots, une matière dérivée de blé, une matière dérivée de pommes de terre, une matière dérivée de riz, une matière dérivée de maïs, et des huiles et graisses végétales.

2. Aliment selon la revendication 1,
dans lequel une proportion d'une phase aqueuse dans l'agent réducteur d'arrière-goût est comprise entre 0,001 et 20 % en masse.

3. Aliment selon la revendication 1,
dans lequel le légume est un ou plusieurs légumes choisis parmi poivrons, carottes, céleri, épinards, chou frisé, chou, oignons, aubergines, concombres, courge amère, courgettes, laitue, poireaux, chrysanthème couronné, chou-fleur, brocoli, oignons verts et feuilles d'orge.

4. Aliment selon la revendication 1,
dans lequel la boisson est une boisson au café ou une boisson au thé noir.
